# EUROPEAN PATENT APPLICATION

(11) **EP 3 505 290 A1**
(43) Date of publication of application: **03.07.2019**
(21) Application number: 16915236.0
(22) Date of filing: 06.10.2016
(51) Int. Cl.: B23K 9/23, B23K 9/007, B23K 9/167, B23K 9/173, B23K 10/02

(54) **ARC-SPOT WELDING METHOD FOR JOINING DIFFERENT MATERIALS, JOINING AUXILIARY MEMBER, AND DIFFERENT MATERIALS WELDING JOINT**

(30) Priority: 29.08.2016 JP 2016166839
(71) Applicant: Kabushiki Kaisha Kobe Seiko Sho (Kobe Steel, Ltd.), Kobe-shi, Hyogo 651-8585 (JP)
(72) Inventor: SUZUKI, Reiichi, Kanagawa 251-8551 (JP)
(74) Representative: TBK
(86) International application number: PCT/JP2016/079822
(87) International publication number: WO 2018/042681

(57) **Abstract**

A different materials welding joint (1) is provided with: an upper plate (10) that is made of an aluminum alloy or a magnesium alloy; and a lower plate (20) that is made of steel and is arc-spot welded to the upper plate (10), wherein the upper plate (10) has a hole (11) that faces a surface superposed on the lower plate (20). The different materials welding joint (1) is further provided with a joining auxiliary member (30) that is made of steel and that has a bulging part (31) to be inserted into the hole (11) provided to the upper plate (10), and a non-insertion part (32). A recess (33) of the bulging part (31) of the joining auxiliary member (30) is filled with a welding metal (40) made of an iron alloy or Ni alloy, and a melting part (W) is formed by the welding metal (40), and the lower plate (20) and the joining auxiliary member (30) which have been melted.

## Description

### TECHNICAL FIELD

The present invention relates to an arc spot welding method for dissimilar material joining, a joining assist member, and a dissimilar material welded joint.

### BACKGROUND ART

Transport equipment as typified by automobiles is always required to be increased in drive fuel efficiency for the purpose of suppressing various items such as (a) the consumption of petroleum fuels which are limited resources, (b) CO₂ which is a global warming gas generated with burning, and (c) the running cost. Among means as an improvement measure is vehicle weight reduction as well as improvements in motive force-related technologies such as use of electric driving. One means for weight reduction is to replace steel which is a current main material with light materials such as aluminum alloys, magnesium alloys, carbon fiber, etc. However, replacing all of the materials with such light materials has problems such as cost increase and insufficiency in strength. As a countermeasure against these problems, a design method so called "multi-material" in which a proper combination of steel and a light material are used at each location is now attracting attention.

Combining steel and any of the above-described light materials necessarily results in occurrence of a position where to join these materials. Whereas steel materials, aluminum alloy materials, or magnesium alloy materials can be welded to each other easily, it is known that welding of different materials is very difficult. This is because intermetallic compounds (IMCs) which are very fragile are formed in a melt-mixing portion between steel and aluminum or magnesium and destroyed easily when receiving external stress caused by tension, impact, or the like. As a result, such welding methods as the resistance spot welding method and the arc welding method cannot be used for dissimilar material joining and it is common to use other joining methods. Welding cannot be used for joining of steel and carbon fiber because the latter is not a metal.

Among conventional dissimilar material joining techniques is, for example, a means in which through-holes are formed through both of a steel material and a light material and they are bound together by pressing them against each other from both sides using a bolt and a nut. Another example means is known in which materials are bound together by a swaging effect by inserting a swaging member from one side by applying a strong pressure to it (refer to Patent document 1, for example).

A still another example means is proposed in which a steel joining member is pushed, as a punch, into an aluminum alloy material, whereby a hole is formed and the joining member is bound tentatively. Subsequently, the aluminum alloy material is overlapped with a steel material, the two kinds of members are sandwiched between copper electrodes from both sides, and the steel material and the joining member are resistance-welded to each other by applying pressure and large current to them instantaneously. (Refer to Patent document 2, for example.)

A further example means has been developed in which an aluminum alloy material and a steel material are joined together directly using a friction stir joining tool (refer to Patent document 3, for example).

### Prior Art Documents

### Patent Documents

Patent document 1: JP-A-2002-174219
Patent document 2: JP-A-2009-285678
Patent document 3: Japanese Patent No. 5,044,128

### SUMMARY OF THE INVENTION

### Problems to Be Solved by the Invention

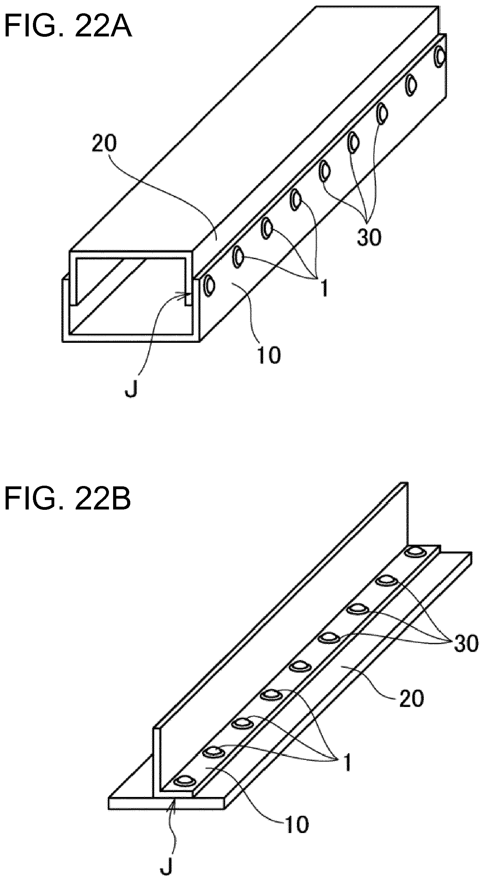

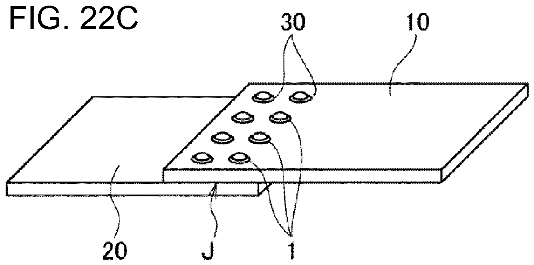

However, the bolt-nut joining method cannot be applied to a case where a steel material and a light material form a structure having a closed cross section (see FIG. 22A) because nuts cannot be inserted. Even in the case of a joint having an open section structure to which this method is applicable (see FIG. 22B and FIG. 22C), another problem of low efficiency arises because screwing nuts into the materials takes time.

Though the joining method disclosed in Patent document 1 is a relatively easy method, it is associated with a problem that the swaging member cannot be inserted in the case where the steel material is high in strength and a problem that high joining strength cannot be obtained because the joining strength depends on the frictional force and the stiffness of the swaging member. There is another problem that this joining method cannot be applied to a closed section structure because it is necessary to press the swaging member by a jig from the front side and the back side in inserting it.

The joining method disclosed in Patent document 2 cannot be applied to a closed section structure, either. And there is another problem that a facility for a resistance welding method is very expensive.

As for the joining method disclosed in Patent document 3, where pressure is applied to the surface of a steel material while an aluminum alloy material is caused to flow plastically in a low temperature range, the two materials do not melt-mix with each other, necessary metallic bonding force can be obtained without formation of intermetallic compounds. There exists a study report stating that joining of steel and carbon fiber is also possible. However, this joining method is associated with problems that it cannot be applied to a closed section structure either, and that it requires a large mechanical facility and hence is expensive because high pressure needs to be generated. Furthermore, resulting joining force is not very strong.

As such, each of the existing dissimilar material joining techniques has one or more of the problems that (i) the materials and the groove shape are restricted to ones suitable for an open section structure, (ii) the joining strength is low, and (iii) the facility cost is high. Thus, to spread multi-material designing that enables combination of various kinds of materials, a new technique is desired that is easy to use and satisfies all of conditions of (i') being applicable to both of an open section structure and a closed section structure, (ii') attaining sufficiently high joining strength and being high in reliability, and (iii') being low in cost.

The present invention has been made in view of the above problems, and an object of the invention is therefore to provide an arc spot welding method for dissimilar material joining, a joining assist member, and a dissimilar material welded joint that make it possible to join different materials, that is, steel and an aluminum alloy (hereinafter also referred to as "Al alloy") or a magnesium alloy (hereinafter also referred to as "Mg alloy"), with quality of being high in strength and reliability using an inexpensive facility already available on the market, and that can be applied to both of an open section structure and a closed section structure with no limitations.

### Means for Solving the Problems

To melt-join steel and an Al alloy or an Mg alloy, formation of intermetallic compounds (IMCs) is unavoidable as mentioned above. On the other hand, it is apparent scientifically and empirically that steel-to-steel welding provides highest joining strength and reliability.

In view of the above, the inventors have conceived a means capable of attaining joining to steel by binding force by using steel-to-steel welding to obtain connection force while not melting an Al alloy or an Mg alloy.

The above object of the invention is thus attained by the constitutions and configurations described below:
(1) An arc spot welding method for dissimilar material joining for joining a first plate made of an aluminum alloy or a magnesium alloy and a second plate made of steel, the method including:
   a step of making a hole through the first plate;
   a step of overlapping the first plate with the second plate;
   a step of inserting a joining assist member made of steel into the hole formed in the first plate, the joining assist member having a swell portion and a non-insertion portion provided around the swell portion; and
   a step of penetrating and melting the swell portion of the joining assist member to weld the second plate and the joining assist member by any method of the following (a) to (e):
      (a) a gas-shielded arc welding method using, as a consumable electrode, a welding wire to provide the weld metal made of an iron alloy or a nickel alloy;
      (b) a non-gas arc welding method using the welding wire as a consumable electrode;
      (c) a gas tungsten arc welding method using the welding wire as a non-consumable electrode filler;
      (d) a plasma arc welding method using the welding wire as a non-consumable electrode filler; and
      (e) a coated arc welding method using, as a consumable electrode, a coated arc welding rod to provide the weld metal made of an iron alloy or a nickel alloy.
(2) The arc spot welding method for dissimilar material joining according to (1), wherein the swell portion of the joining assist member is formed of a central portion of a flat plate by drawing and the non-insertion portion is formed of a portion other than the central portion of the flat plate.
(3) The arc spot welding method for dissimilar material joining according to (1), wherein the second plate has a swell portion formed by drawing, and the swell portion of the second plate is placed in the hole of the first plate in the overlapping step.
(4) The arc spot welding method for dissimilar material joining according to (1), further including, before the overlapping step, a step of applying an adhesive to at least one of overlapped surfaces of the first plate and the second plate around the hole over its entire circumference.
(5) The arc spot welding method for dissimilar material joining according to (1), wherein in the inserting step, an adhesive is applied to at least one of confronting surfaces between the non-insertion portion of the joining assist member and the first plate opposed to the non-insertion portion.
(6) The arc spot welding method for dissimilar material joining according to (1), wherein in the inserting step or after the filling and welding step, an adhesive is applied to a boundary between the non-insertion portion of the joining assist member and a surface of the first plate.
(7) The arc spot welding method for dissimilar material joining according to (1), wherein a gap G between the swell portion of the joining assist member and the second plate is 0.5 mm or smaller.
(8) The arc spot welding method for dissimilar material joining according to (1), wherein the non-insertion portion of the joining assist member has a diameter P_{D} of 105% or larger of a diameter B_{D} of the hole of the first plate.
(9) The arc spot welding method for dissimilar material joining according to (1), wherein the non-insertion portion of the joining assist member has a height P_{H} of 50% or larger and 150% or smaller of a thickness B_{H} of the first plate.
(10) A joining assist member to be used for the arc spot welding method for dissimilar material joining according to any one of (1) to (9), the joining assist member being made of steel and having a swell portion provided in a central portion and a non-insertion portion provided around the swell portion.
(11) A dissimilar material welded joint including a first plate made of an aluminum alloy or a magnesium alloy and a second plate made of steel and arc-spot-welded to the first plate,
   wherein the first plate has a hole that reaches an overlapped surface to the second plate,
   the dissimilar material welded joint further includes a joining assist member made of steel, the joining assist member having a swell portion inserted in the hole provided in the first plate and a non-insertion portion provided around the swell portion, and
   a recess formed in the swell portion of the joining assist member is filled with a weld metal made of an iron alloy or a nickel alloy, and a melting portion is formed of the weld metal and melted portions of the second plate and the joining assist member.
(12) The dissimilar material welded joint according to (11), wherein the non-insertion portion is formed into a flat plate shape and the swell portion is formed in a central portion of an external shape of the non-insertion portion.
(13) The dissimilar material welded joint according to (11), wherein a swell portion formed in the second plate is placed in the hole of the first plate.
(14) The dissimilar material welded joint according to (11), including an adhesive applied to at least one of confronting surfaces of the first plate and the second plate around the hole over its entire circumference.
(15)The dissimilar material welded joint according to (11), including an adhesive applied to at least one of confronting surfaces between the non-insertion portion of the joining assist member and the first plate opposed to the non-insertion portion.
(16) The dissimilar material welded joint according to (11), including an adhesive applied to a boundary between the non-insertion portion of the joining assist member and a surface of the first plate.
(17) The dissimilar material welded joint according to (11), wherein a gap G between the swell portion of the joining assist member and the second plate is 0.5 mm or smaller.
(18) The dissimilar material welded joint according to (11), wherein the non-insertion portion of the joining assist member has a diameter P_{D} of 105% or lager of a diameter B_{D} of the hole of the first plate.
(19) The dissimilar material welded joint according to (11), wherein the non-insertion portion of the joining assist member has a height P_{H} of 50% or larger and 150% or smaller of a thickness B_{H} of the first plate.

### Advantages of the Invention

The invention makes it possible to join different materials, that is, steel and an aluminum alloy or a magnesium alloy, with quality of being high in strength and reliability using an inexpensive arc welding facility and enables application to both of an open section structure and a closed section structure with no limitations.

### BRIEF DESCRIPTION OF THE DRAWINGS

FIG. 1A is a perspective view of a dissimilar material welded joint according to an embodiment of the present invention.
FIG. 1B is a sectional view of the dissimilar material welded joint taken along line I-I in FIG. 1A.
FIG. 2A shows boring work of an arc spot welding method for dissimilar material joining according to the embodiment.
FIG. 2B shows overlapping work of the arc spot welding method for dissimilar material joining according to the embodiment.
FIG. 2C shows insertion work of the arc spot welding method for dissimilar material joining according to the embodiment.
FIG. 2D shows welding work of the arc spot welding method for dissimilar material joining according to the embodiment.
FIG. 3A shows a state before drawing a joining assist member.
FIG. 3B shows a state after drawing a joining assist member.
FIG. 4 is a perspective view showing a process in which a circular flat plate is formed into the joining assist member by drawing.
FIG. 5A is a front view and a side view of a joining assist member according to a first modification.
FIG. 5B is a front view and a side view of a joining assist member according to a second modification.
FIG. 5C is a front view and a side view of a joining assist member according to a third modification.
FIG. 5D is a front view and a side view of a joining assist member according to a fourth modification.
FIG. 5E is a front view and a side view of a joining assist member according to a fifth modification.
FIG. 6A is a sectional view of a dissimilar material welded joint in which a recess remains in appearance.
FIG. 6B is a sectional view showing deformation of the dissimilar material welded joint of FIG. 6A when receiving external stress in the thickness direction.
FIG. 7A is a sectional view of a dissimilar material welded joint in which an excess weld metal is formed.
FIG. 7B is a sectional view showing deformation of the dissimilar material welded joint of FIG. 7A when receiving external stress in the thickness direction.
FIG. 8A is a sectional view of a dissimilar material welded joint for description of weld penetration of a weld metal.
FIG. 8B is a sectional view of a dissimilar material welded joint for description of weld penetration of a weld metal.
FIG. 9 is a sectional view of a dissimilar material welded joint showing a state where external forces are acting in width directions to separate a top plate and a bottom plate from each other.
FIG. 10 is a sectional view of a dissimilar material welded joint showing a state where external forces are acting in thickness directions to separate the top plate and the bottom plate from each other.
FIG. 11A is a sectional view of the top plate, the bottom plate, and the joining assist member showing a state before arc welding where a gap exists between the top plate and the bottom plate.
FIG. 11B is a sectional view of the dissimilar material welded joint showing a state after the arc welding together with thermal contraction forces.
FIG. 12 is a sectional view of the top plate, the bottom plate, and the joining assist member showing dimensional relationships of the joining assist member.
FIG. 13A is a perspective view of the top plate and the bottom plate for description of an arc spot welding method for dissimilar material joining according to a first modification.
FIG. 13B is a sectional view of the top plate and the bottom plate for description of the arc spot welding method for dissimilar material joining according to the first modification.
FIG. 14A is a perspective view of the top plate and the bottom plate for description of an arc spot welding method for dissimilar material joining according to a second modification.
FIG. 14B is a sectional view of the top plate and the bottom plate for description of the arc spot welding method for dissimilar material joining according to the second modification.
FIG. 15A is a perspective view of the top plate, the bottom plate, and a joining assist member for description of an arc spot welding method for dissimilar material joining according to a third modification.
FIG. 15B is a sectional view of the top plate, the bottom plate, and the joining assist member for description of the arc spot welding method for dissimilar material joining according to the third modification.
FIG. 16 shows a state where arc welding is performed in a horizontal posture in the third modification.
FIG. 17A is a perspective view of a dissimilar material welded joint for description of an arc spot welding method for dissimilar material joining according to a fourth modification.
FIG. 17B is a sectional view of the dissimilar material welded joint for description of the arc spot welding method for dissimilar material joining according to the fourth modification.
FIG. 18A is a top view, a side view, and a bottom view of the joining assist member shown in FIG. 1.
FIG. 18B is a top view, a side view, and a bottom view of a joining assist member according to a sixth modification.
FIG. 19 is a sectional view for description of an arc spot welding method for dissimilar material joining and a dissimilar material welded joint according to a fifth modification.
FIG. 20A is a sectional view illustrating a step of overlapping a top plate with a bottom plate having a swell portion formed by drawing in the arc spot welding method for dissimilar material joining according to the fifth modification.
FIG. 20B is a sectional view illustrating a step of inserting a joining assist member in the hole of the top plate overlapped with the bottom plate having a swell portion formed by drawing in the arc spot welding method for dissimilar material joining according to the fifth modification.
FIG. 20C is a sectional view illustrating a state where the swell portion of the bottom plate and the swell portion of the joining assist member are placed in the hole of the top plate in the arc spot welding method for dissimilar material joining according to the fifth modification.
FIG. 21 is a sectional view of the top plate, the bottom plate, and the joining assist member showing dimensional relationships of the dissimilar material welded joint according to the fifth modification.
FIG. 22A is a perspective view showing a closed section structure to which the dissimilar material welded joint according to the embodiment is applied.
FIG. 22B is a perspective view showing an open section structure formed by an L-shaped plate and a flat plate to which the dissimilar material welded joint according to the embodiment is applied.
FIG. 22C is a perspective view showing an open section structure formed by two flat plates to which the dissimilar material welded joint according to the embodiment is applied.
FIG. 23A is a front view of a joining assist member according to a seventh modification.
FIG. 23B is a side sectional view of the joining assist member according to the seventh modification.
FIG. 24A is a perspective view showing a closed section structure to which the dissimilar material welded joint according to the embodiment is applied while using the joining assist member according to the seventh modification.
FIG. 24B is a perspective view showing an open section structure formed by an L-shaped plate and a flat plate to which the dissimilar material welded joint according to the embodiment is applied while using the joining assist member according to the seventh modification.
FIG. 24C is a perspective view showing an open section structure formed by two flat plates to which the dissimilar material welded joint according to the embodiment is applied while using the joining assist member according to the seventh modification.

### MODES FOR CARRYING OUT THE INVENTION

An arc spot welding method for dissimilar material joining, a joining assist member, and a dissimilar material welded joint according to an embodiment of the present invention will be hereinafter described in detail with reference to the drawings.

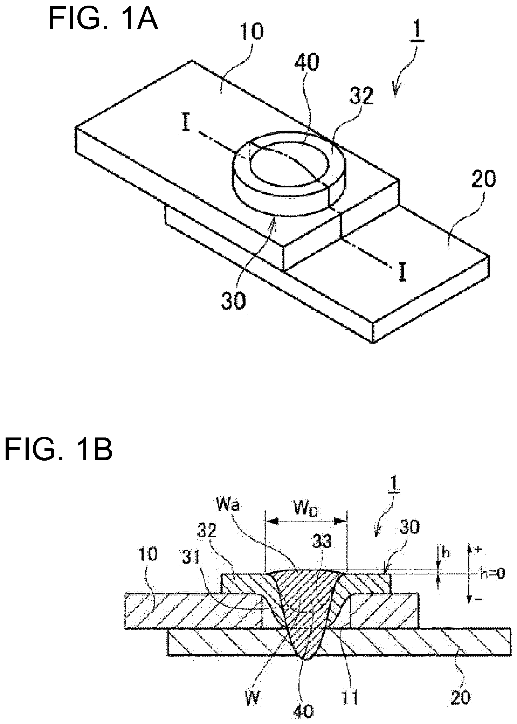

In the arc spot welding method for dissimilar material joining according to the embodiment, a dissimilar material welded joint 1 as shown in FIG. 1A and FIG. 1B is obtained by joining a top plate 10 (first plate) made of an aluminum alloy or a magnesium alloy and a bottom plate 20 (second plate) made of steel that are overlapped with each other, via a joining assist member 30 made of steel by an arc spot welding method described later.

The top plate 10 has a hole 11 that reaches an overlapped surface to the bottom plate 20 to penetrate in the thickness direction, and the joining assist member 30 is inserted into the hole 11.

The joining assist member 30 has a swell portion 31 to be inserted into the hole 11 of the top plate 10, the swell portion 31 formed by drawing described later and a flange-shaped non-insertion portion 32 to be placed on the top surface of the top plate 10, the non-insertion portion 32 provided around the swell portion 31 and being a flat plate shape.

Furthermore, a recess of the swell portion 33 of the joining assist member 30 is filled with a weld metal 40 of an iron alloy or an Ni alloy provided by melt of a filler material (welding material) by arc spot welding, and a melting portion W is formed of the weld metal 40 and a part of melted portions of the bottom plate 20 and the joining assist member 30.

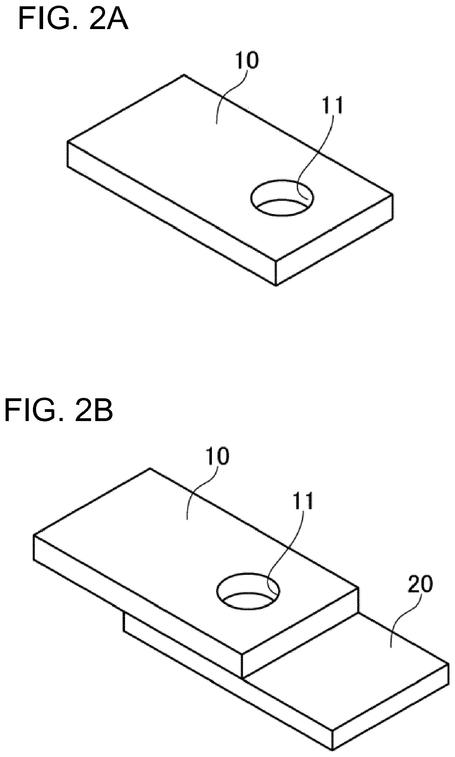

An arc spot welding method for dissimilar material joining for constructing the dissimilar material welded joint 1 will be described below with reference to FIG. 2A to FIG. 2D.

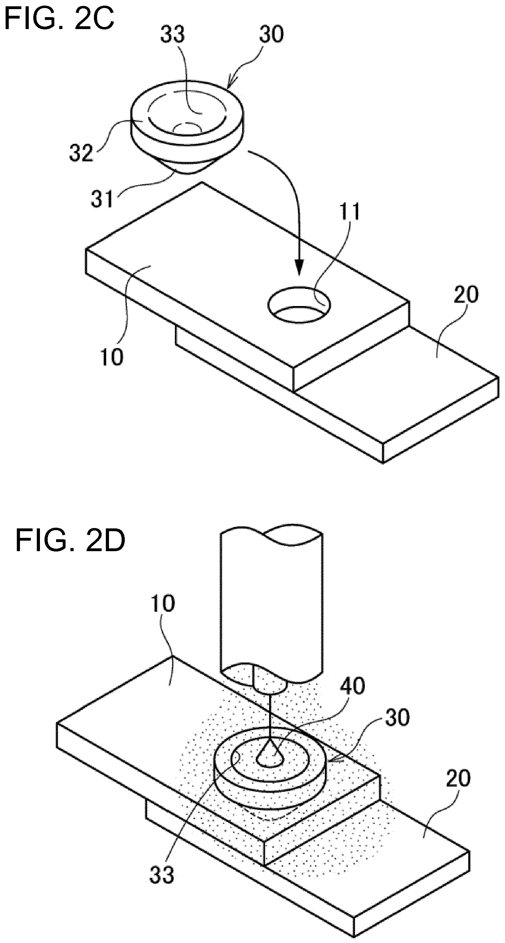

First, as shown in FIG. 2A, boring work for making a hole 11 through the top plate 10 is performed (step S1). Overlapping work of overlapping the top plate 10 and the bottom plate 20 with each other is then performed as shown in FIG. 2B (step S2). Then, as shown in FIG. 2C, the swell portion 31 of the joining assist member 30 is inserted into the hole 11 of the top plate 10 from the top surface of the top plate 10 (step S3). Subsequently, as shown in FIG. 2D, the top plate 10 and the bottom plate 20 are joined to each other by performing any arc welding work of (a) a consumable-electrode gas-shielded arc welding method, (b) a non-gas arc welding method, (c) a gas tungsten arc welding method, (d) a plasma arc welding method, and (e) a coated arc welding method (step S4). FIG. 2D shows a case where arc welding work is performed by (a) the consumable-electrode gas-shielded arc welding method.

Specific examples of methods for the boring work of step S1 include a) cutting using a rotary tool such as an electric drill or a drilling machine, b) punching with a punch, and c) press punching using a die.

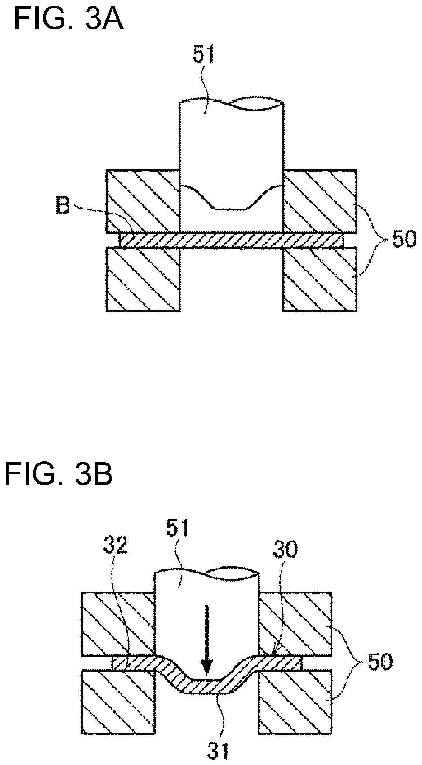

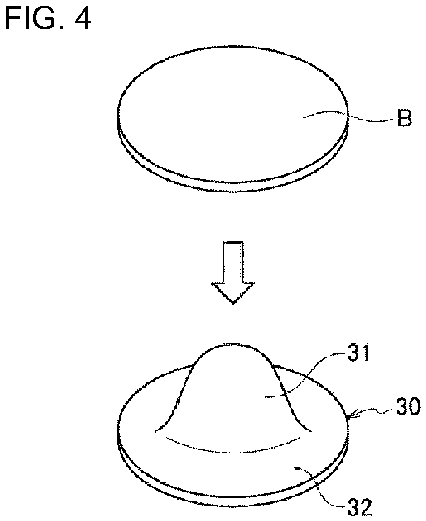

It is advantageous in terms of manufacturing cost and efficiency that the joining assist member 30 used in step S3 is formed by drawing. In the drawing, first, as shown in FIG. 3A and FIG. 4A, a flat plate B having a circular external shape is prepared and a peripheral portion of the flat plate B is bound by dies 50. A punch 51 is then pressed into a central portion of the flat plate B by applying pressure to the punch 51 as shown in FIG. 3B, whereby a joining assist member 30 is formed in which a swell portion 31 is formed in a central portion and a non-insertion portion 32 is formed in a peripheral portion other than the central portion as shown in FIG. 4B.

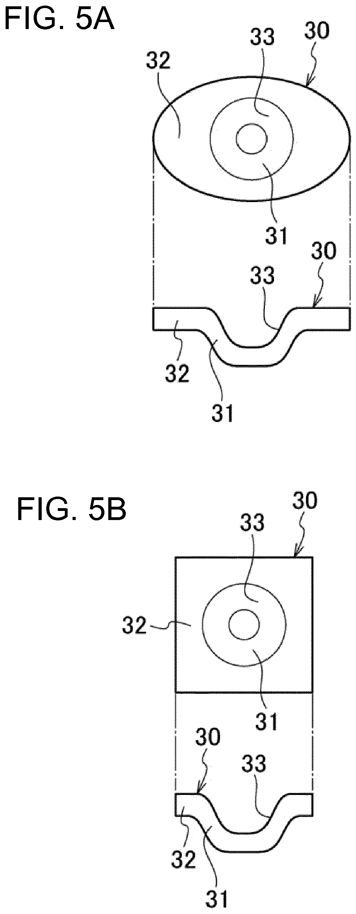

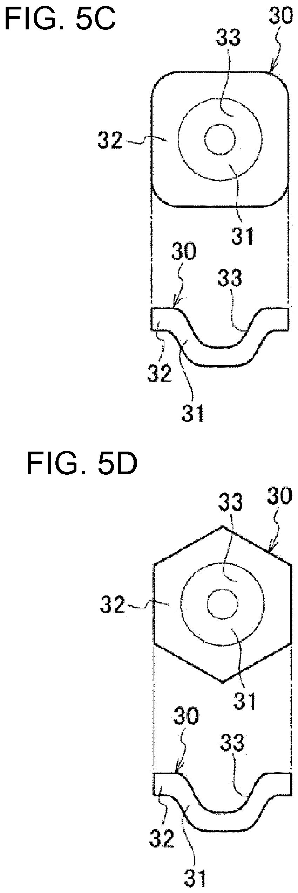

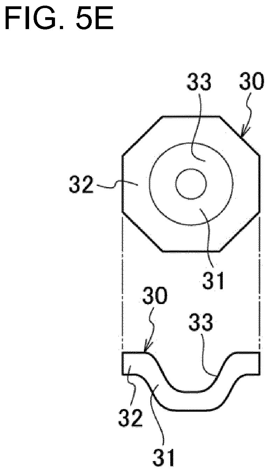

The external shape of the joining assist member 30 need not always be a circle and may be an ellipse or a polygon having vertices that are larger than or equal to a quadrilateral in number as shown in FIG. 5A to FIG.5E. In the case where the joining assist member 30 is shaped like a polygon, its vertices may be rounded as shown in FIG. 5C. After the drawing, the non-insertion portion 32 may be trimmed into a smaller size by punching or the like. Where the joining assist member 30 has a non-circular external shape, the diameter P_{D} of the joining assist member 30 described later is defined as a shortest distance between confronting portions.

The shape of the recess 33 of the swell portion 31 is not restricted to a circle either and may be any shape.

The arc welding work of step S4 is necessary to join the joining assist member 30 and the bottom plate 20 and fill the recess 33 of the swell portion 31 of the joining assist member 30. It is therefore indispensable for the arc welding to insert a filler material (welding material). More specifically, the weld metal 40 is formed by melting the filler material by the following four arc welding methods.
(a) The consumable-electrode gas-shielded arc welding method, which is a welding method commonly called MAG or MIG, is a method in which a good welded portion is formed by using a solid wire or a flux-containing wire as a filler/arc generation consumable electrode and shielding the welded portion from the air by a shielding gas such as CO₂, Ar, or He.
(b) The non-gas arc welding method, which is also called a self-shielded arc welding method, is a means for forming a good welded portion using a special flux-containing wire as a filler/arc generation consumable electrode while dispensing with a shielding gas.
(c) The gas tungsten arc welding method is one kind of gas-shielded arc welding method but is of a non-consumable-electrode type, and is commonly called TIG. An inert gas such as Ar or He is used as a shielding gas. An arc is generated between a tungsten electrode and a base material, and a filler wire is supplied to the arc from the side.
   Whereas in general no current is applied to the filler wire, there exists hot wire TIG in which the melting rate is increased by applying a current to the filler wire. In this case, no arc is generated from the filler wire.
(d) The plasma arc welding method, which is the same as the TIG in the principle, is a welding method in which the arc power is increased by tightening an arc by employing double gas supply systems and increasing the gas supply rate.
   In the embodiment, the joining assist member 30 needs to be melted and burned through to weld the bottom plate 20. Thus, the plasma arc welding method providing increasing arc power is more preferable as a non-consumable-electrode type.
(e) The coated arc welding method is an arc welding method in which a coated arc welding rod in which a metal core wire is coated with flux is used as a filler. No shielding gas is necessary.

As for the filler material (welding material), common welding wires can be employed as long as the weld metal 40 is an Fe alloy. An Ni alloy can also be used because it does not cause any problems in welding to iron.

More specifically, on the market are JIS standard materials such as (a) Z3312, Z3313, Z3317, Z3318, Z3321, Z3323, and Z3334, (b) Z3313, (c) Z3316, Z3321, and Z3334, and (d) Z3211, Z3221, Z3223, Z3224 and AWS (American Welding Society) standard materials such as (a) A5.9, A5.14, A5.18, A5.20, A5.22, A5.28, A5.29, and A5.34, (b) A5.20, (c) A5.9, A5.14, A5.18, and A5.28, and (d) A5.1, A5.4, A5.5, and A5.11.

The recess 33 of the swell portion 31 of the joining assist member 30 is filled with a filler material using the above arc welding methods. In general, it is not necessary to move the target position of the filler wire or welding rod. It is appropriate to finish welding by ending arc formation after a lapse of a proper supply time. However, in the case where the recess 33 has a large area, the target position of the filler wire or welding rod may be moved so as to form a circle in the recess 33.

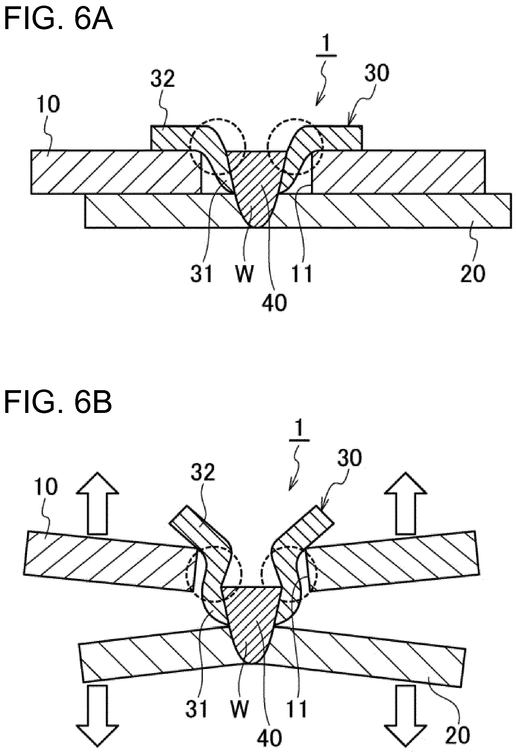

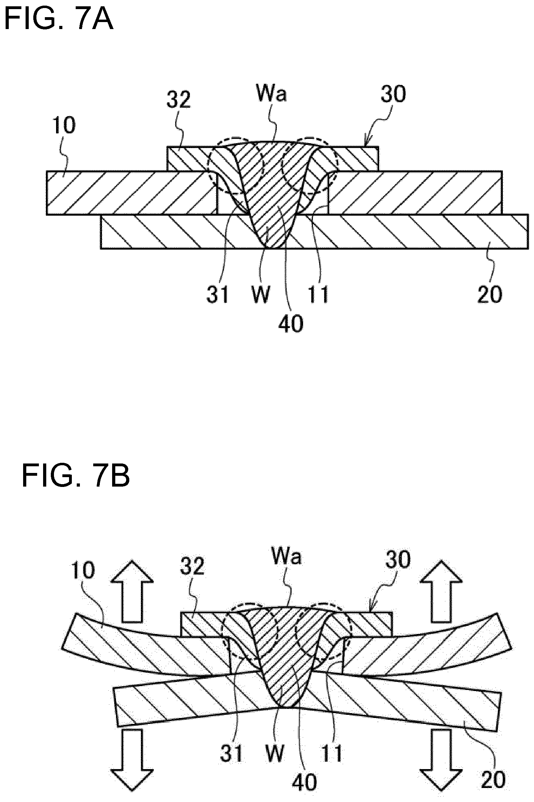

It is desirable that the weld metal 40 fill up the recess 33 of the joining assist member 30 and, furthermore, form an excess weld metal Wa on the surface of the joining assist member 30 (see FIG. 1B). If no excess weld metal is formed, that is, a part of the recess 33 remains in appearance after welding as shown in FIG. 6A, the non-insertion portion 32 of the joining assist member 30 might be deformed inward to cause full coming-off when external stress in the thickness direction (three-dimensional directions) is received as shown in FIG. 6B. On the other hand, in the case where excess weld metal Wa is formed as shown in FIG. 7A, the stiffness is increased and full coming-off can be prevented even if external stress in the thickness direction (three-dimensional directions) is received as shown in FIG. 7B and higher strength against such external stress is obtained.

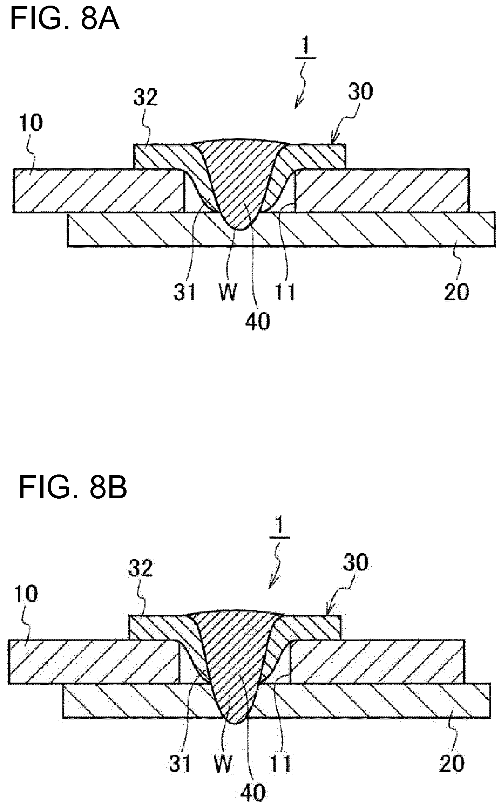

On the other hand, as for the weld penetration on the side opposite to the side of formation of the excess weld metal, it is necessary that part of the bottom plate 20 be melted to a proper extent as shown in FIG. 8A. There is no problem even if as shown in FIG. 8B the weld metal 40 is formed past the bottom surface of the bottom plate 20, that is, the bottom plate 20 is melted to such an extent that what is called a penetration bead is formed.

However, high strength cannot be obtained if no part of the bottom plate 20 is melted and the weld metal 40 is merely placed thereon. On the other hand, welding needs to be performed so that the weld metal 40 does not melt so deep that the weld metal 40 and the bottom plate 20 cause burn-through.

By the above steps of work, the top plate 10 made of an Al alloy or an Mg alloy and the bottom plate 20 made of steel are joined with high strength.

The steel joining assist member 30 that is used in the above-described arc spot welding method plays the following four roles.

As a first effect, it provides protective wall action for preventing melt of Al alloy or Mg alloy. Al alloy or Mg alloy in the joining portion is most likely to melt on the inner surface of the hole 11 and a surface portion around the inner surface. By covering these surfaces with the joining assist member 30, propagation of heat of arc welding directly to the Al alloy or Mg alloy is prevented and mixing with steel to form intermetallic compounds (IMCs) is prevented. Since the weld penetration range of the arc welding is restricted to within the joining assist member 30 and the bottom plate 20, there occurs no dilution of the weld metal 40 with Al or Mg and hence formation of IMCs can be prevented completely.

If IMCs are formed which have an extremely fragile characteristic, they would be broken easily when receiving deforming stress. If the weld penetration range of the arc welding is restricted to within the joining assist member 30 and the bottom plate 20, there occurs no dilution of the weld metal 40 with Al or Mg and hence formation of IMCs can be prevented completely. If no IMCs are formed in the weld metal 40, it has necessary and sufficient ductility as long as a common welding material is used ad hence it exhibits strong resistance to deforming stress.

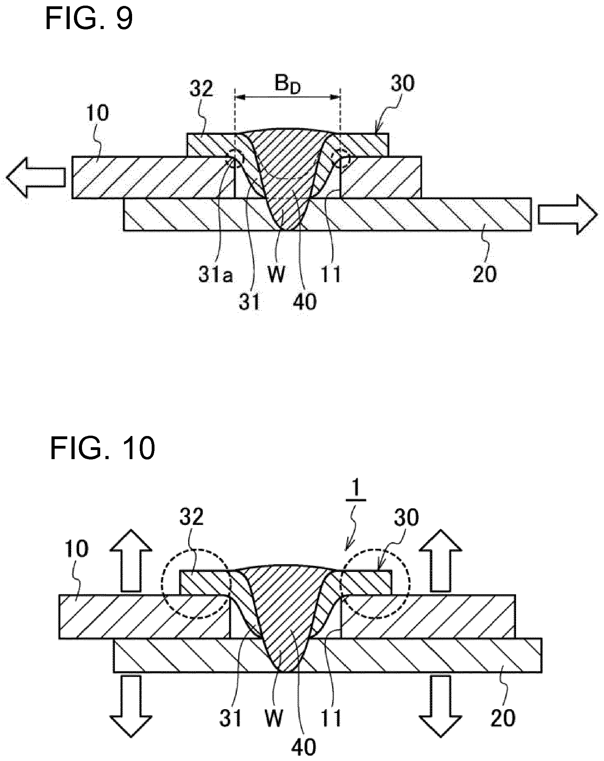

As a second effect, the joining assist member 30 dominantly plays a role of providing resistance force when receiving external stress in the thickness direction. Whereas the bottom plate 20 and the joining assist member 30 are fixed by the weld metal 40 formed by the embodiment of the invention, the top plate 10 is not metallically bonded to neither the bottom plate 20 nor the joining assist member 30. However, if as shown in FIG. 9 the diameter of a start portion 31a of the swell portion 31 of the joining assist member 30 coincides with the diameter B_{D} of the hole 11 of the top plate 10, the top plate 10 cannot move physically even if no metallic bonding is made.

As a third effect, the joining assist member 30 dominantly plays a role of providing resistance force when receiving external stress in the thickness direction, that is, peeling stress. Whereas as mentioned above the weld metal 40 and the slant surface of the start portion 31a of the swell portion 31 of the joining assist member 30 act as resistive bodies in the width direction (two-dimensional directions), what is called "full coming-off' by peeling-off at the interface between the joining assist member 30 or the weld metal 40 and the top plate 10 is prone to occur when stress in the thickness direction (three-dimensional directions) is received.

On the other hand, in the embodiment, since the joining assist member 30 has, on the top surface of the top plate 10, the non-insertion portion 32 which is wider in area than the hole 11, full coming-off can be prevented even if external forces are exerted in the thickness direction as indicated by arrows in FIG. 10. In the joining assist member 30 which is produced by drawing a flat plate, a peripheral portion that was not subjected to the drawing plays a role of a resistive body for resisting external force in the thickness direction.

In the arc welding step, the joining assist member 30, the weld metal 40, and the bottom plate 20 are joined by strong metallic bond and, as a result, the non-insertion portion 32 of the joining assist member 30 serves as a resistive body against external stress in the thickness direction.

As described later in detail, the non-insertion portion 32 becomes stronger against external stress in the thickness direction (three-dimensional directions) as its diameter and thickness increase, and it is thus preferable. However, the non-insertion portion 32 being unduly large is a factor in increasing the weight and means too long a projection from the surface of the top plate 10, which would deteriorate the aesthetic appearance or cause interference with other, nearby members. Thus, the size of the non-insertion portion 32 should be determined so as to satisfy design requirements.

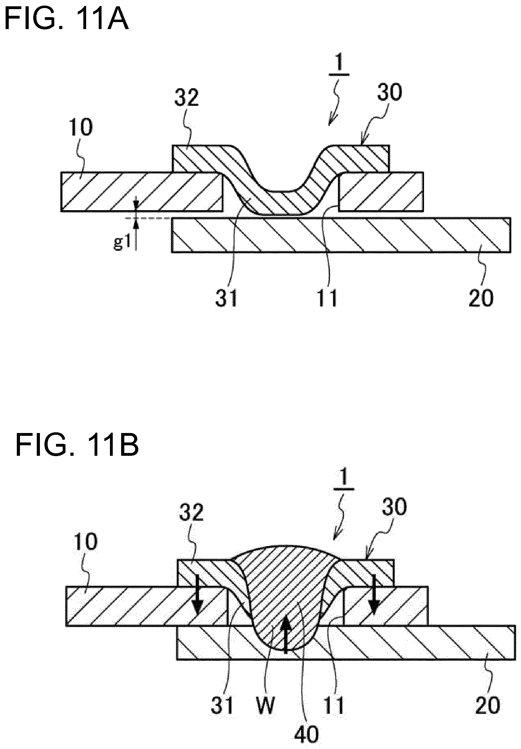

As a fourth effect, a gap g1 (see FIG. 11A) that caused between the overlapped surfaces when the top plate 19 made of an Al alloy or an Mg alloy is overlapped with the bottom plate 20 made of steel is minimized. In the arc welding step, the weld metal 40 experiences thermal contraction and, during that course, force of causing the bottom plate 20 and the non-insertion portion 32 of the joining assist member 30 to come closer to each other acts on them. Even if a small gap g1 exists before the welding, the gap g1 after the welding decreases as shown in FIG. 11B, which means increase in the design accuracy of the joining portion.

The use of the joining assist member 30 which has the above four effects and has a two-level shape including the swell portion 31 and the non-insertion portion enables joining of a steel plate and Al alloy or Mg alloy.

There are no particular limitations on the specific material of the steel joining assist member 30 except that it should be pure iron or an iron alloy. Specific examples include soft steel, carbon steel, and stainless steel.

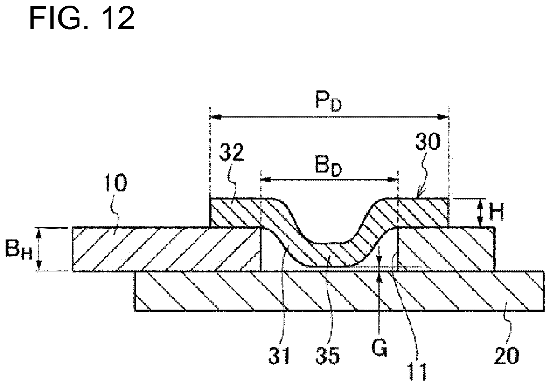

As shown in FIG. 12, various dimensions of the joining assist member 30 are set in the following manners with respect to the top plate 10 and the bottom plate 20.

### Swell portion height

The gap G between the swell portion 31 of the joining assist member 30 and the bottom plate 20 is designed to be 0.5 mm or smaller. The joining assist member 30 is inserted into the hole 11 formed in the top plate 10 and is joined to the bottom plate 20 by arc welding. Thus, in the arc welding, the swell portion 31 of the joining assist member 30 and the bottom plate 20 need to be melted. Since an arc does not directly touch the bottom plate 20, the bottom plate 20 is melted by conduction of heat from a molten pool. Thus, it is necessary that the molten pool that is formed by melting of the joining assist member 30 be also in contact with the bottom plate 20. If the gap between the joining assist member 30 and the bottom plate 20 is large, the molten pool is not in contact with the bottom plate 20 to cause almost no conduction of heat to the bottom plate 20 or is in contact with the bottom plate 20 with a small contact area. As a result, the heat conduction to the bottom plate 20 may be too low to melt the bottom plate 20 or to melt the bottom plate 20 to provide a sufficiently large contact area. Thus, the gap between the joining assist member 30 and the bottom plate 20 should be small. It is desirable that the gap be 0.5 mm or smaller. It is more desirable that the gap G be made 0, that is, the joining assist member 30 and the bottom plate 20 be in contact with each other. It is therefore appropriate to determine the height of the swell portion 31 so that the gap G is made 0.5 mm or smaller taking the thickness of the top plate into consideration.

It is preferable that to secure a necessary contact area the drawing be performed so that the swell portion 31 has a flat bottom portion 35 (see FIG. 12).

### Non-insertion portion diameter P_{D}

The non-insertion portion diameter P_{D} is designed to be 105% or larger of the diameter B_{D} of the hole 11 of the top plate 10. As described in the third effect of the joining assist member 30, the non-insertion portion 32 of the joining assist member 30 dominantly plays a role of providing resistance force when external stress in the thickness direction, that is, peeling stress, is received. The non-insertion portion 32 becomes stronger with respect to external stress as its diameter P_{D} and thickness increase. A larger and thicker non-insertion portion 32 is thus desirable. In the case where the non-insertion portion diameter P_{D} is smaller than 105% of the diameter B_{D} of the hole 11, when an outer circumferential portion of the non-insertion portion 32 is deformed elasto-plastically by external stress in the thickness direction, the apparent diameter of the non-insertion portion 32 is very prone to become smaller than or equal to the diameter B_{D} of the hole 11 of the top plate 10, in which case the top plate 10 is prone to come off. That is, the non-insertion portion 32 does not provide a strong resistance force. Thus, the lower limit of the non-insertion portion diameter P_{D} is set at 105% of the diameter B_{D} of the hole 11. It is even preferable that the lower limit of the non-insertion portion diameter P_{D} be set at 120% of the diameter B_{D} of the hole 11. On the other hand, from the viewpoint of the strength of the joining portion, it is not necessary to set the upper limit.

### Non-insertion portion height P_{H}

The non-insertion portion height P_{H} is designed to be 50% or larger and 150% or smaller of the thickness B_{H} of the top plate 10. As described above, the non-insertion portion 32 becomes stronger with respect to external stress in the thickness direction (three-dimensional directions) as its diameter and height (thickness) increase, and it is thus desirable. A stronger resistance force is provided by increasing the non-insertion portion height P_{H} according to the thickness B_{H} of the top plate 10 of the joint. In the case where the non-insertion portion height P_{H} is smaller than 50% of the thickness B_{H} of the top plate 10, an outer circumferential portion of the non-insertion portion 32 is easily deformed elasto-plastically by external stress in the thickness direction. When the apparent diameter of the non-insertion portion 32 becomes smaller than or equal to the diameter B_{D} of the hole 11 of the top plate 10, coming-off is prone to occur. That is, the non-insertion portion 32 does not provide a strong resistance force. Thus, the lower limit of the non-insertion portion height P_{H} is set at 50% of the thickness B_{H} of the top plate 10. On the other hand, where the non-insertion portion height P_{H} is larger than 150% of the thickness B_{H} of the top plate 10, not only the appearance is poor because of excessive projection of the non-insertion portion 32 but also the weight is heavy though the joint has no problem in strength. Thus, it is necessary to set the non-insertion portion height P_{H} 150% or smaller of the thickness B_{H} of the top plate 10.

Although it is not always necessary to restrict the thickness of the top plate 10 or the bottom plate 20, it is desirable to set the thickness of the top plate 10 4.0 mm or smaller when the working efficiency and the lap welding shape are taken into consideration. On the other hand, it is desirable that the thickness of each of the top plate 10 and the bottom plate 20 is 0.5 mm or larger because, considering a heat input of the arc welding, an unduly small thickness causes burn-through during welding and thereby makes the welding difficult.

With the above configurations, the top plate 10 made of an aluminum alloy or a magnesium alloy and the bottom plate 20 made of steel can be joined to each other strongly.

It is known that the direct joining of different kinds of metals is associated with a problem other than the formation of IMCs. That is, when different kinds of metals are brought into contact with each other, a galvanic cell is formed, which is a cause of accelerating corrosion. Corrosion caused by this phenomenon (anode reaction in the cell) is called electric corrosion. Corrosion is accelerated when water exists in an interface where different kinds of metals are in contact with each other. Thus, where the embodiment is applied to a joining location into which water is prone to intrude, it is necessary to subject the joining location to sealing treatment for preventing intrusion of water to prevent electric corrosion. Also in this joining method, since there are plural interfaces where an Al alloy or Mg alloy comes into contact with steel, it is preferable to use a resin-based adhesive not only for further increase of joint strength but also as a sealing material.

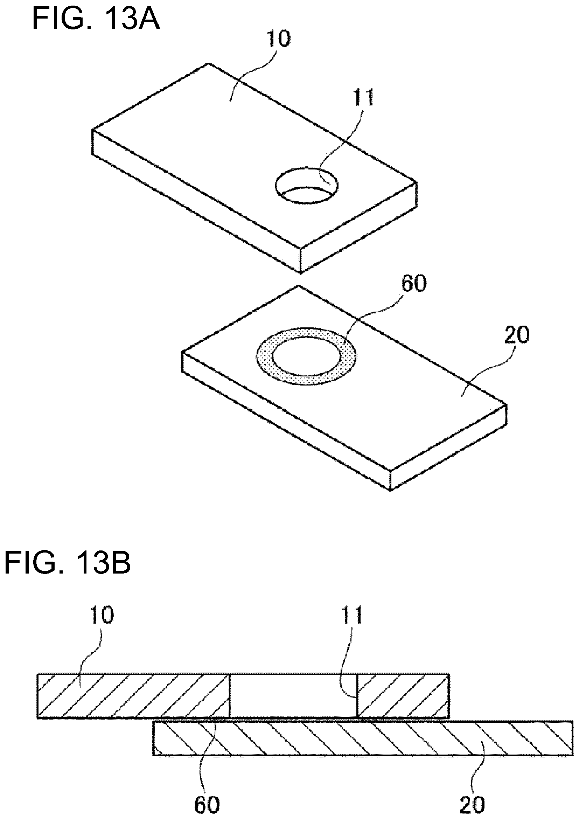

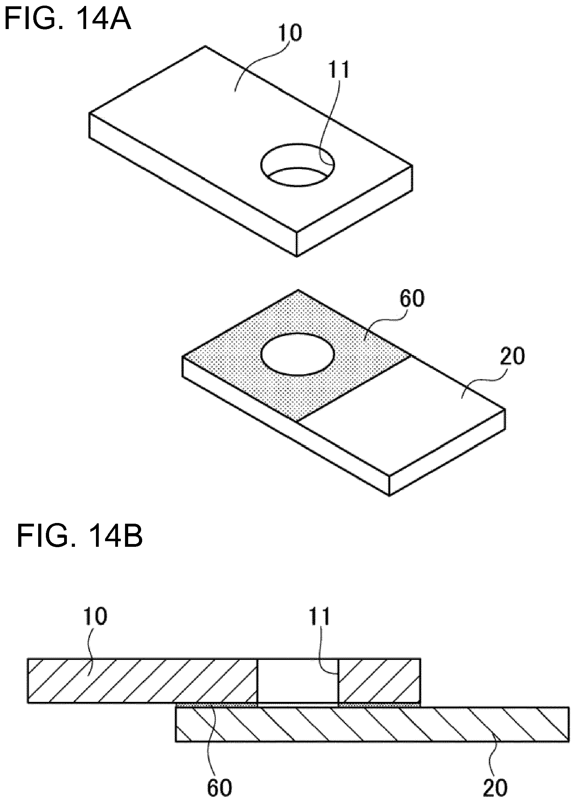

For example, as in a first modification shown in FIG. 13A and FIG. 13B, adhesive 60 may be applied in a ring-like shape around a welding portion over entire circumference between the joining surfaces of the top plate 10 and the bottom plate 20. As in the second modification shown in FIG. 14A and FIG. 14B, another method for applying adhesive 60 around a welding portion over entire circumference between joining surfaces of the top plate 10 and the bottom plate 20 includes a method in which adhesive 60 is applied in the entire area of the joining surface excluding the welding portion. This makes it possible to lower the electric corrosion rates of the top plate 10, the bottom plate 20, and the weld metal 40.

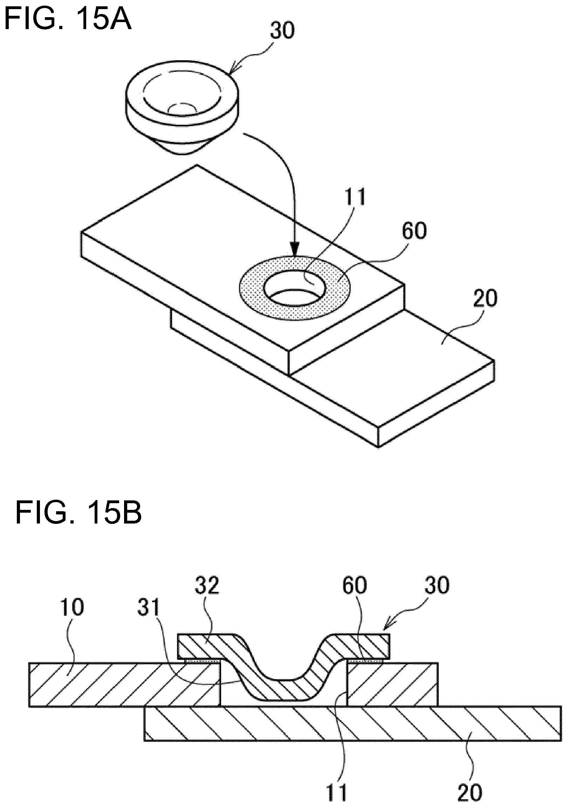

As in a third modification shown in FIG. 15A and 15B, adhesive 60 may be applied between a portion around the hole 11 of the top plate 10 and the bottom surface of the non-insertion portion 32 of the joining assist member 30. This makes it possible to lower the electric corrosion rates of the top plate 10, the joining assist member 30, and the weld metal 40.

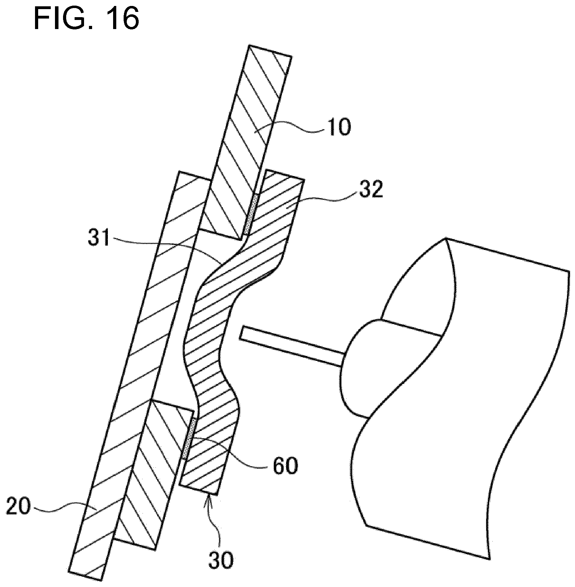

In this case, an auxiliary effect is obtained that the joining assist member 30 is tentatively fixed to the top plate 10 before arc welding. In particular, where as shown in FIG. 16 arc welding is performed in a horizontal or upward-directed posture, applying adhesive 60 in advance makes it possible to prevent the joining assist member 30 from coming off due to gravity and thereby perform welding properly.

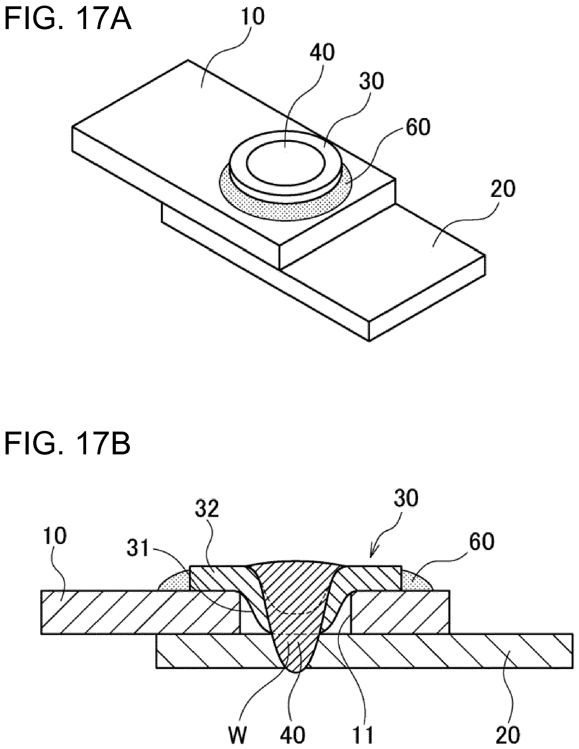

As in a fourth modification shown in FIG. 17A and 17B, adhesive 60 may be applied to the boundary between the non-insertion portion 32 of the joining assist member 30 and the surface of the top plate 10. This provides, in addition to the effect of lowering the electric corrosion rates, an effect that the joining assist member 30 is tentatively fixed to the top plate 10 if the adhesive 60 is applied before the arc welding. Whereas in the third modification shown in FIG. 16A and FIG. 16B, the application can be made only before the welding step, in the fourth modification shown in FIG. 17A and FIG. 17B, the application can be made either before or after the welding step.

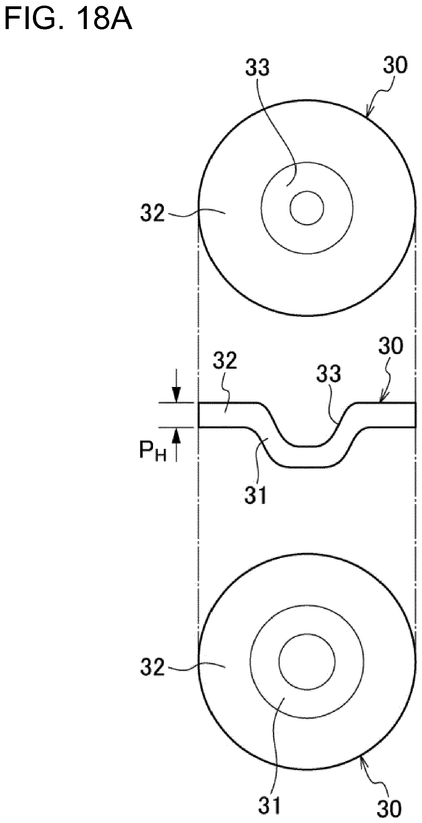

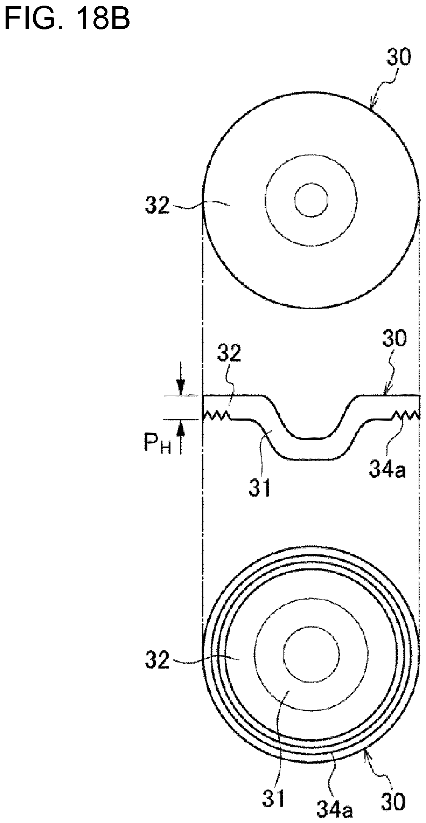

In the joining assist member 30, the surface, to come into contact with the top plate 10, of the non-insertion portion 32 need not always be a flat surface, as shown in FIG. 18A. That is, as shown in FIG. 18B, if necessary, the surface, to come into contact with the top plate 10, of the non-insertion portion 32 may have slits 34a. In particular, in the case where the surface, to come into contact with the top plate 10, of the non-insertion portion 32 has circumferential slits 34a, applied adhesive 60 goes into the slits and does not go away, whereby stable sticking is attained and a reliable sealing effect is obtained. In the case of such a non-flat surface, a portion having the largest height is defined as the non-insertion portion height P_{H}.

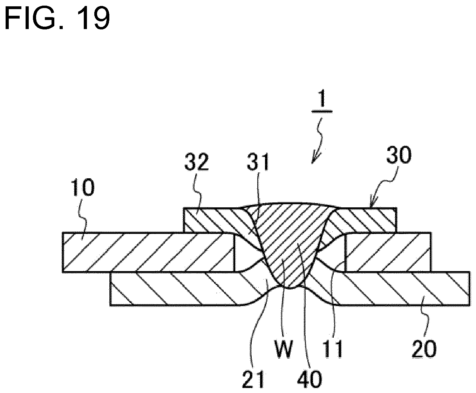

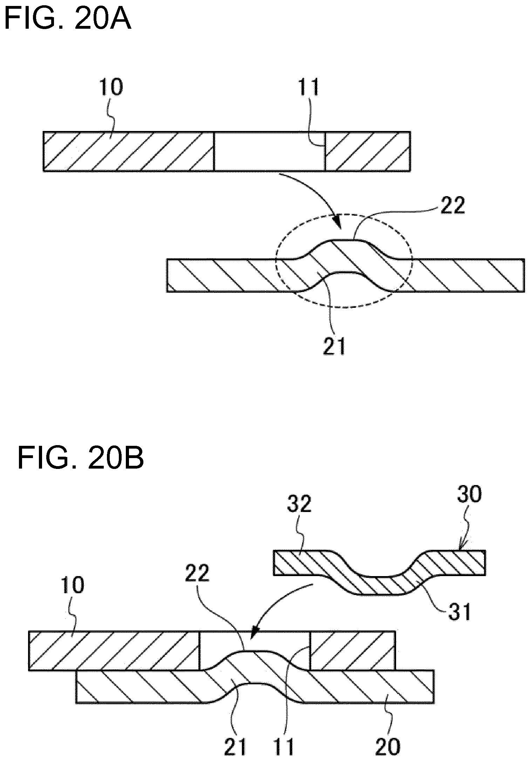

Furthermore, as in a fifth modification shown in FIG. 19 and FIG. 20A to FIG. 20C, the dissimilar material welded joint 1 may have not only a swell portion 31 formed in the joining assist member 30, but also a swell portion 21 formed in the bottom plate 20.

There is a typical case where the thickness of the top plate 10 made of an Al alloy or an Mg alloy is large. In the case where the top plate 10 is thick, it is necessary to increase the height of the swell portion 31 formed by drawing of the joining assist member 30 proportionally. However, too large a drawing ratio may cause breaking of the joining assist member 30 depending on its thickness and material. In view of this, it is possible to form the joining assist member 30 with a smaller drawing ratio by forming a swell portion 21 also in the bottom plate 20 by drawing.

In addition, in the fifth modification, the swell portion 21 of the bottom plate 20 can be used as a mark when the top plate 10 and the bottom plate 20 are positioned with respect to each other. As a result, the swell portion 21 of the bottom plate 20 and the hole 11 of the top plate 10 can easily be positioned with respect to each other and the efficiency of overlapping work can be increased.

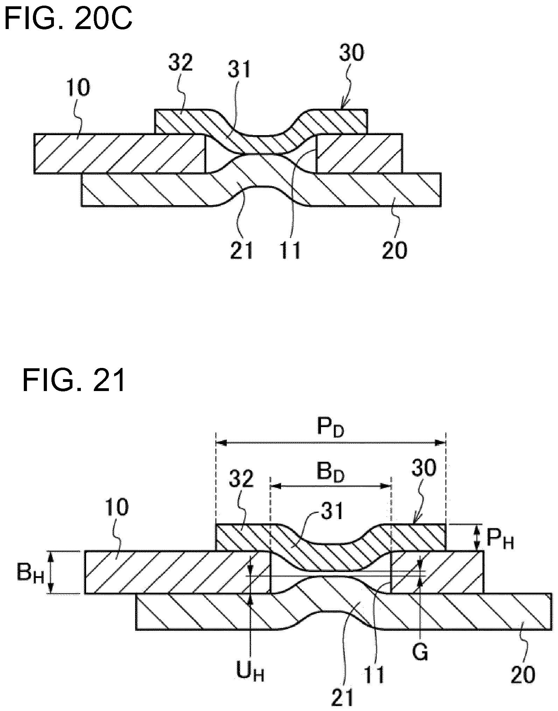

Furthermore, in the fifth modification, as shown in FIG. 21, it is appropriate that the height of the swell portion 31 of the joining assist member 30 be determined so that the gap G becomes 0.5 mm or smaller with the thickness of the top plate 10 and the height of the swell portion 21 of the bottom plate 20 taken into consideration.

As shown in FIG. 20A, to secure a necessary contact area, it is preferable that the swell portion 21 of the bottom plate 20 be also formed by drawing so as to have a flat bottom portion 22.

Since the welding method of this embodiment can be called spot welding with a small joining area, in the case of joining overlapped portions J of members of actual use having a relatively large joining area, this welding method may be employed at plural positions in manners shown in FIG. 22A to FIG. 22C. Thereby, strong joining can be attained in the overlapped portions J. Whereas the embodiment can be used for open section structures as exemplified in FIG. 22B and FIG. 22C, it can be used particularly suitably for closed section structures as exemplified in FIG. 22A.

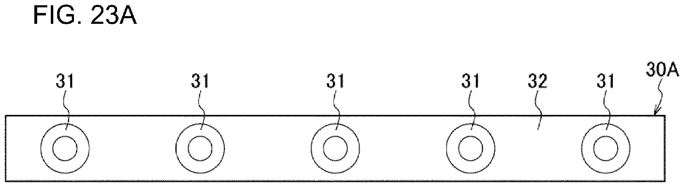

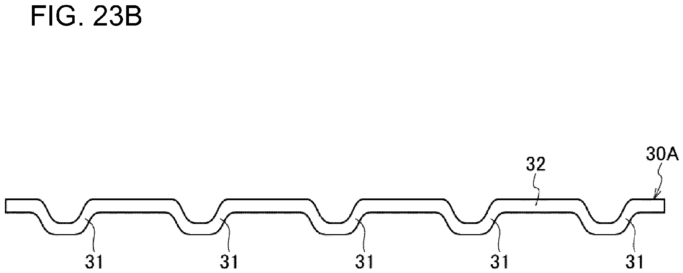

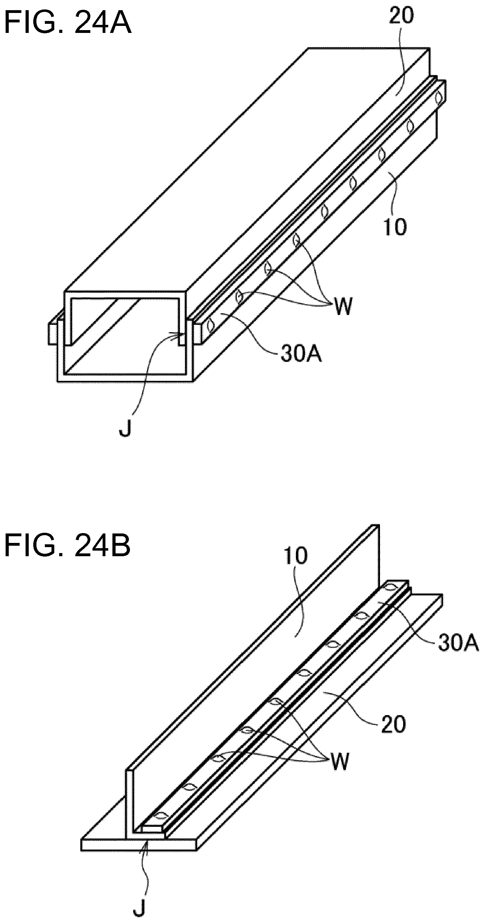

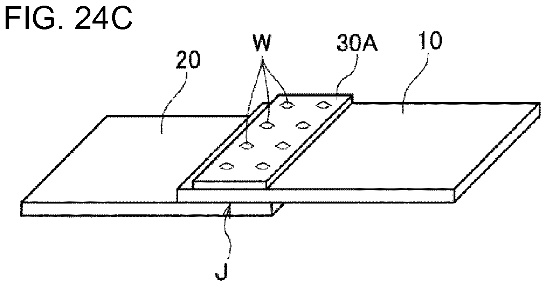

Whereas in the joints shown in FIG. 22A to FIG. 22C the joining assist members 30 are inserted one by one at all of the respective welding positions, a single joining assist member 30A may be provided in which plural swell portions 31 are formed by drawing as shown in FIG. 23A and FIG. 23B. With this, the joining assist member 30A can be used for open section structures and closed section structures as exemplified in FIG. 24A to FIG. 24C, the efficiency of the work of inserting the joining assist member 30A can be increased, and arc welding can be performed on each swell portion 31.

As described above, the arc spot welding method for dissimilar material joining according to the embodiment includes a step of making a hole 11 through a top plate 10; overlapping the top plate 10 with a bottom plate 20; a step of inserting a joining assist member 30 made of steel into the hole 11 formed in the top plate 10, the joining assist member 30 having a swell portion 31 and a non-insertion portion 32 provided around the swell portion 31; and a step of filling a recess 33 of the swell portion 31 of the joining assist member 30 with a weld metal 40 and welding the bottom plate 20 and the joining assist member 30 by any method of the following (a) to (e).
(a) A gas-shielded arc welding method using, as a consumable electrode, a welding wire to provide the weld metal 40 made of an iron alloy or a nickel alloy;
(b) a non-gas arc welding method using the above welding wire as a consumable electrode;
(c) a gas tungsten arc welding method using the above welding wire as a non-consumable electrode filler;
(d) a plasma arc welding method using the above welding wire as a non-consumable electrode filler; and
(e) a coated arc welding method using, as a consumable electrode, a coated arc welding rod to provide the weld metal 40 made of an iron alloy or an Ni alloy.

This method makes it possible to join the top plate 10 made of an Al alloy or an Mg alloy and the bottom plate 20 made of steel using an inexpensive arc welding facility with quality of being high in strength and reliability, and can be applied to both of an open section structure and a closed section structure with no limitations.

The swell portion 31 of the joining assist member 30 is formed of a central portion of a flat plate B by drawing and the non-insertion portion 32 is formed of a portion other than the central portion of the flat plate B. Thus, the joining assist member 30 can be produced easily by drawing.

The bottom plate 20 has a swell portion 21 formed by drawing and the swell portion 21 of the bottom plate 20 is placed in the hole 11 of the top plate 10 in the overlapping step. Even in the case where the top plate 10 is thick, the joining assist member 30 can be formed with a small drawing ratio and hence breaking of the joining assist member 30 can be suppressed.

The above method further includes, before the overlapping step, a step of applying an adhesive 60 to at least one of overlapping surfaces of the top plate 10 and the bottom plate 20 around the hole 11 over its entire circumference. Thereby, the adhesive not only increases the strength of a joint but also serves as a sealing material and can thereby lower the corrosion rates of the top plate 10, the bottom plate 20, and the weld metal 40.

In the inserting step, an adhesive 60 is applied to at least one of confronting surfaces between the non-insertion portion 32 of the joining assist member 30 and the top plate 10 opposed to the non-insertion portion 32. Thereby, the corrosion rates of the top plate 10, the joining assist member 30, and the weld metal 40 can be lowered.

In the inserting step or after the filling and welding step, an adhesive 60 is applied to the boundary between the non-insertion portion 32 of the joining assist member 30 and the surface of the top plate 10. Thereby, the joining strength of the top plate 10 and the joining assist member 30 can be increased. Applying the adhesive 60 in the inserting step can provide an effect of fixing the joining assist member 30 tentatively.

Since the gap G between the swell portion 31 of the joining assist member 30 and the bottom plate 20 is 0.5 mm or smaller, the bottom plate 20 can be melted reliably in the arc welding.

The diameter P_{D} of the non-insertion portion 32 of the joining assist member 30 is 105% or larger of the diameter B_{D} of the hole 11 of the top plate 10. This allows the non-insertion portion 32 to function as resistance force against external stress in the thickness direction.

The height P_{H} of the non-insertion portion 32 of the joining assist member 30 is 50% or larger and 150% or smaller of the thickness B_{H} of the top plate 10. This allows the non-insertion portion 32 to function as resistance force against external stress in the thickness direction while taking appearance and weight increase into consideration.

The joining assist member 30 according to the embodiment is made of steel and has a swell portion 31 provided in a central portion and a non-insertion portion 32 provided around the swell portion 31. Configured in this manner, the joining assist member 30 can be used suitably for the above-described arc spot welding method for dissimilar material joining.

The dissimilar material welded joint 1 according to the embodiment includes a top plate 10 made of an aluminum alloy or a magnesium alloy and a bottom plate 20 made of steel and arc-spot-welded to the top plate 10, wherein the top plate 10 has a hole 11 that reaches the overlapped surface to the bottom plate 20. The dissimilar material welded joint 1 further includes a joining assist member 30 made of steel, the joining assist member 30 having a swell portion 31 inserted in the hole 11 formed in the top plate 10 and a non-insertion portion 32 provided around the swell portion 31. A recess 33 of the swell portion of the joining assist member 30 is filled with a weld metal 40 made of an iron alloy or an Ni alloy, and a melting portion W is formed of the weld metal 40 and melted portions of the bottom plate 20 and the joining assist member 30.

This dissimilar material welded joint 1 having the top plate 10 made of an Al alloy or an Mg alloy and the bottom plate 20 made of steel is joined using an inexpensive arc welding facility with joining quality of being high in strength and reliability, and can be applied to both of an open section structure and a closed section structure with no limitations.

The invention is not limited to the above-described embodiment and Examples and various modifications, improvements, etc. are possible as appropriate.

### Examples

The effectiveness of the embodiment was confirmed using Examples A to E described below.

### <Examples A>

In Examples A, a lap joint was used having a combination of a 1.6 mm-thick top plate 10 made of an aluminum alloy A5083 and a 1.4 mm-thick bottom plate 20 made of 590 MPa-class high tensile strength steel. This lap joint was joined by fixed-point arc welding of a prescribed time by a MAG welding method using a 1.2 mm-diameter JIS Z3312 YGW16 steel welding wire and using, as a shielding gas, a mixed gas of 80% Ar and 20% CO₂.

This welding joint 1 was subjected to breaking tests according to JIS Z3136 "Test piece dimensions and test method of shearing test of resistance spot and projection welding joint" and JIS Z3137 "Cross tension test for resistance spot and projection welding joint." In the following, tensile strength of Z3136 was referred to as TSS and tensile strength of Z3137 was referred to as CTS. Acceptance criteria were TSS ≥ 8 kN and CTS ≥ 5 kN.

To obtain preferable performance values, but not indispensable, the welding joint 1 was also subjected to JASO-CCT (Japanese Automobile Standards Organization Cyclic Corrosion Test) in which a welded joint was subjected to repetition of spraying of salt water, drying, and moistening to cause accelerated corrosion, through 28 days. It was then subjected to the same breaking tests as described above to obtain TSS after corrosion and CTS after corrosion. Acceptance criteria for these preferable performance values were that they should be 80% or larger of respective values of the tests without corrosion.

In Table 1, Comparative Examples are denoted by Nos. A1 to A5 and Examples are denoted by Nos. A6 to A14. In Tables 1 to 5, recess filling h means height of the weld metal 40 from the top surface of the joint assist member 30, and recess filling h in the case of forming an excess weld metal Wa is taken as positive. (Symbol U means "used" and NU means "not used," and symbol F means "formed" and NF means "not formed.")

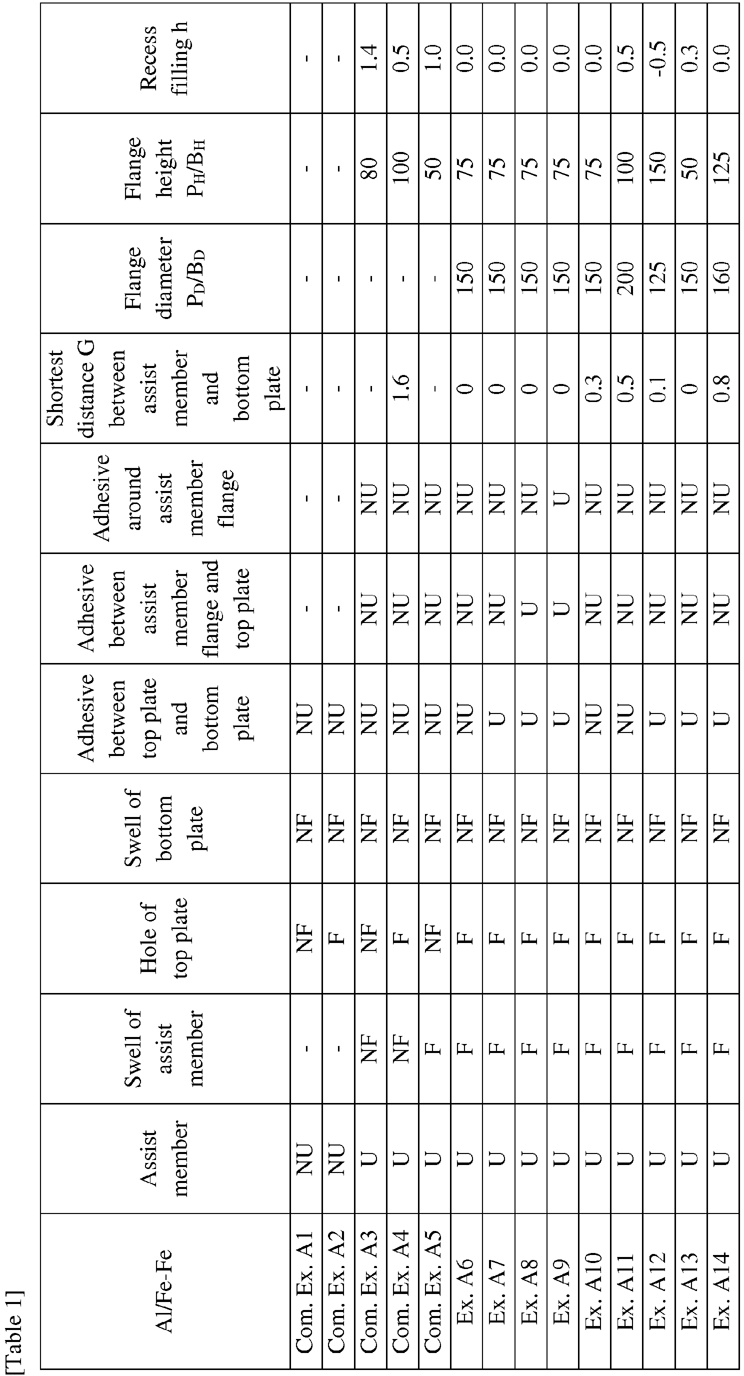

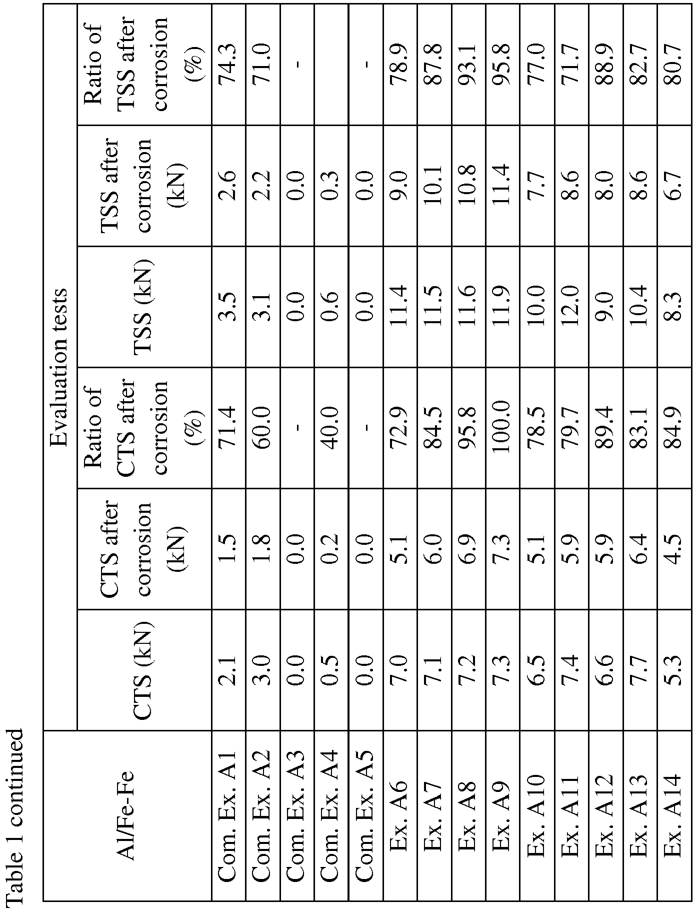

In No. A1, no joining assist member was used, no hole was made through the top plate 10, and arc welding was performed directly on the top plate 10. No adhesive was used. Since a steel welding wire and an aluminum base material were melt-mixed, a weld metal formed was very fragile intermetallic compounds and TSS and CTS were low.

In No. A2, arc welding was performed without using the joining assist member 30 though a 12.0 mm-diameter hole 11 was made through the top plate 10. Since the aluminum mixing proportion of a weld metal was smaller than in No. A1, the amount of intermetallic compounds was small and the degree of embrittlement was low. However, TSS and CTS were still low.

In No. A3, the joining assist member 30 was put on the top plate 10 through which no hole was made and arc welding was performed from above the joining assist member 30. The material of the joining assist member 30 was JIS G3106 SM490C (this also applies to the following samples of Examples A). The joining assist member 30 was not subjected to drawing and had a flat plate shape. As a result, weld penetration into the bottom plate 20 through the joining assist member 30 and the top plate 10 could not be caused and the welding failed.

In No. A4, the joining assist member 30 was put on the top plate 10 through which a 12.0 mm-diameter hole 11 was made and arc welding was performed from above the joining assist member 30. The joining assist member 30 was not subjected to drawing and had a flat plate shape. As a result, penetration by arc welding through the joining assist member 30 was caused. However, the weld penetration into the bottom plate 20 was very small and the sample was broken easily in the breaking tests.

In No. A5, the joining assist member 30 was put on the top plate 10 through which no hole was made and arc welding was performed from above the joining assist member 30. The joining assist member 30 was subjected to drawing to form a swell portion 31. As in No. A3, weld penetration into the bottom plate 20 through the joining assist member 30 and the top plate 10 could not be caused and the welding failed.

On the other hand, in Nos. A6 to A14, the joining assist member 30 was put on the top plate 10 through which a 12.0 mm-diameter hole was made and arc welding was performed from above the joining assist member 30. The joining assist member 30 was subjected to drawing, and a swell portion 31 was received in the hole 11 of the top plate 10. In these samples, inflow of aluminum into a weld metal 40 formed was restricted to zero or a very small amount by virtue of the presence of the joining assist member 30, whereby a high-quality weld metal was formed. Furthermore, since the degree of weld penetration into the bottom plate 20 was sufficiently high and the non-insertion portion of the joining assist member 30 was larger in area than the hole 11 of the top plate 10, full coming-off was prevented and high CTS was obtained in the cross tension test. Still further, in the samples (Nos. A7 to A9 and A12 to A14) in which a normal temperature quick setting two-liquid-mixing adhesive for metal was applied at a proper location(s), an effect of preventing electric corrosion at aluminum-steel interfaces was obtained, whereby reduction in CTS and TSS due to corrosion was suppressed and high CTS and TSS after corrosion were obtained. More specifically, it is seen that the CTS after corrosion and the TSS after corrosion increase as the number of adhesive application locations increases in order of No. A6, No. A7, No. A8, and No. A9.

### <Examples B>

In Examples B, a lap joint was used having a combination of a 0.8 mm-thick top plate 10 made of a magnesium alloy ASTM AZ31B and a 1.0 mm-thick bottom plate 20 made of 780 MPa-class high tensile strength steel. This lap joint was joined by fixed-point arc welding of a prescribed time by an AC TIG welding method using a 1.0 mm-diameter JIS Z3316 YGT50 steel welding wire as a non-current filler and using, as a shielding gas, 100% Ar gas.

This welding joint 1 was subjected to breaking tests according to JIS Z3136 and JIS Z3137. In the following, tensile strength of Z3136 was referred to as TSS and tensile strength of Z3137 was referred to as CTS. Acceptance criteria were TSS ≥ 4 kN and CTS ≥ 3 kN.

To obtain preferable performance values, but not indispensable, as in Examples A, the welding joint 1 was also subjected to JASO-CCT for 28 days and then subjected to the same breaking tests as described above to obtain TSS after corrosion and CTS after corrosion. Acceptance criteria for these preferable performance values were that they should be 80% or larger of respective values of the tests without corrosion.

In Table 2, Comparative Examples are denoted by Nos. B1 to B5 and Examples are denoted by Nos. B6 to B14.

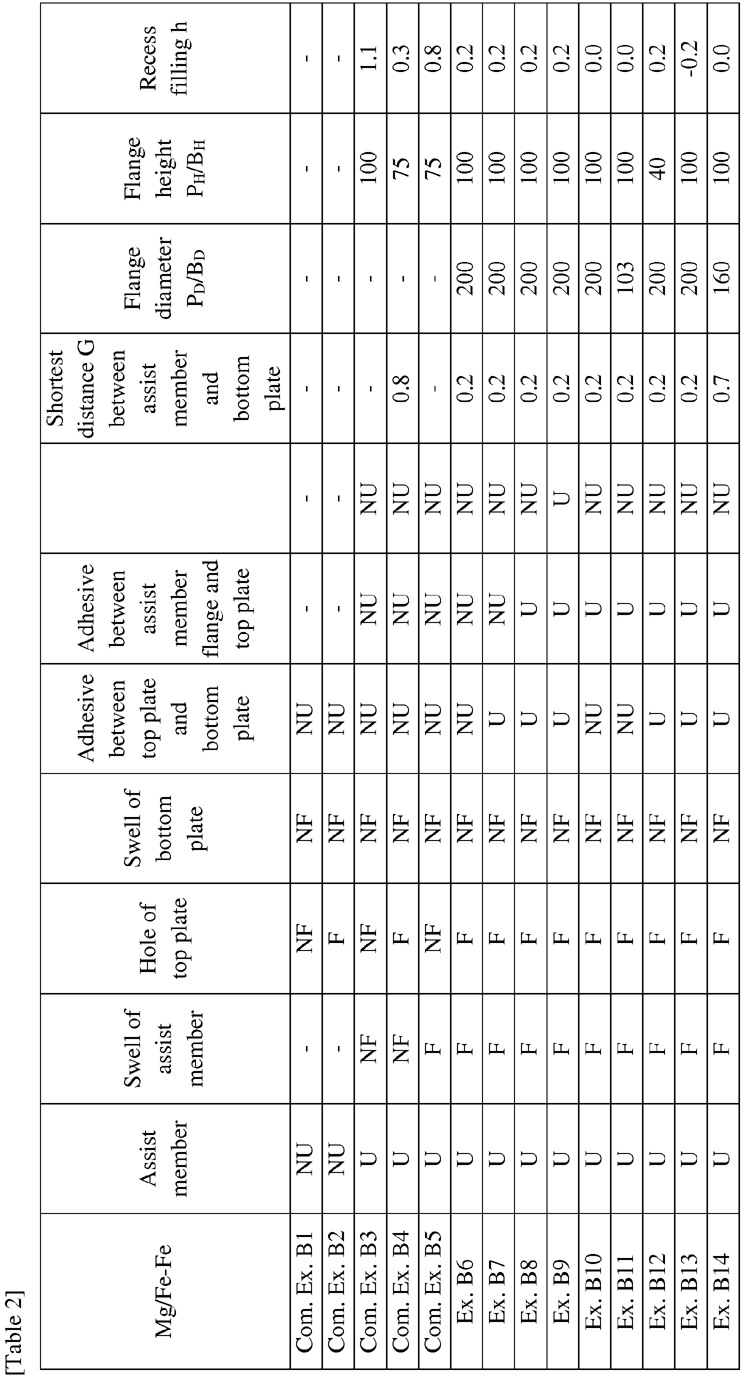

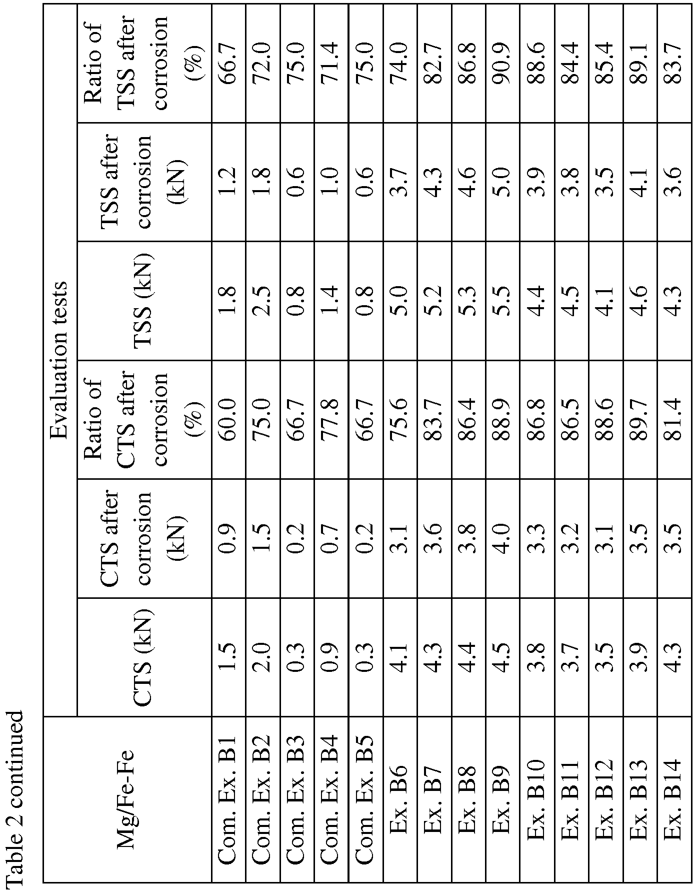

In No. B1, no joining assist member was used, no hole was made through the top plate 10, and arc welding was performed directly on the top plate 10. No adhesive was used. Since a steel welding wire and a magnesium base material were melt-mixed, a weld metal formed was very fragile intermetallic compounds and TSS and CTS were low.

In No. B2, arc welding was performed without using the joining assist member though a 10.0 mm-diameter hole 11 was made through the top plate 10. Since the magnesium mixing proportion of a weld metal was smaller than in No. B1, the amount of intermetallic compounds was small and the degree of embrittlement was low. However, TSS and CTS were still low.

In No. B3, the joining assist member 30 was put on the top plate 10 through which no hole was made and arc welding was performed from above the joining assist member 30. The material of the joining assist member 30 was JIS G3101 SS400 (this also applies to the following samples of Examples B). The joining assist member 30 was not subjected to drawing and had a flat plate shape. As a result, weld penetration into the bottom plate 20 through the joining assist member 30 and the top plate 10 was narrowly caused. However, the weld penetration width in the bottom plate 20 was very small and the weld metal which was a mixture of magnesium and iron was too brittle. This, the sample was broken easily in the breaking tests.

In No. B4, the joining assist member 30 was put on the top plate 10 through which a 10.0 mm-diameter hole 11 was made and arc welding was performed from above the joining assist member 30. The joining assist member 30 was not subjected to drawing and had a flat plate shape. As a result, weld penetration into the bottom plate 20 through the joining assist member 30 was narrowly caused. However, the weld penetration width in the bottom plate 20 was very small and the sample was broken easily in the breaking tests.

In No. B5, the joining assist member 30 was put on the top plate 10 through which no hole was made and arc welding was performed from above the joining assist member 30. The joining assist member 30 was subjected to drawing to form a swell portion 31. As in No. B3, weld penetration into the bottom plate 20 through the joining assist member 30 and the top plate 10 was narrowly caused. However, the weld penetration width in the bottom plate 20 was very small and the weld metal which was a mixture of magnesium and iron was too brittle. This, the sample was broken easily in the breaking tests.

On the other hand, in Nos. B6 to B14, the joining assist member 30 was put on the top plate 10 through which a 10.0 mm-diameter hole was made and arc welding was performed from above the joining assist member 30. The joining assist member 30 was subjected to drawing, and a swell portion 31 was received in the hole 11 of the top plate 10. In these samples, the inflow of magnesium into a weld metal 40 formed was restricted to zero or a very small amount by virtue of the presence of the joining assist member 30, whereby a high-quality weld metal 40 was formed. Furthermore, since the degree of weld penetration into the bottom plate 20 was sufficiently high and the non-insertion portion 32 of the joining assist member 30 was larger in area than the hole 11 of the top plate 10, full coming-off was prevented and high CTS was obtained in the cross tension test. Still further, in the samples (Nos. B7 to B14) in which an normal temperature quick setting type two-liquid-mixing adhesive for metal was applied at a proper location(s), an effect of preventing electric corrosion at magnesium alloy-steel interfaces was obtained, whereby reduction in CTS and TSS due to corrosion was suppressed and high CTS and TSS after corrosion were obtained. More specifically, it is seen that the CTS after corrosion and the TSS after corrosion increase as the number of adhesive application locations increases in order of No. B6, No. B7, No. B8, and No. B9.

### <Examples C>

In Examples C, a lap joint was used having a combination of a 2.6 mm-thick top plate 10 made of an aluminum alloy A6061 and a 2.2 mm-thick bottom plate 20 made of 400 MPa-class steel. This lap joint was joined by fixed-point arc welding of a prescribed time by a coated arc welding method using a 4.0 mm-diameter JIS Z3252 ECNi-C1 Ni alloy coated arc welding rod. A swell portion 21 having a height U_{H} (see FIG. 20) of 1.3 mm was formed by drawing at a welding position in the bottom plate 20.

This welding joint 1 was subjected to breaking tests according to JIS Z3136 and JIS Z3137. In the following, tensile strength of Z3136 was referred to as TSS and tensile strength of Z3137 was referred to as CTS. Acceptance criteria were TSS ≥ 9 kN and CTS ≥ 6 kN.

To obtain preferable performance values, but not indispensable, as in Examples A and B, the welding joint 1 was also subjected to JASO-CCT for 28 days and then subjected to the same breaking tests as described above to obtain TSS after corrosion and CTS after corrosion. Acceptance criteria for these preferable performance values were that they should be 80% or larger of respective values of the tests without corrosion.

In Table 3, Comparative Examples are denoted by Nos. C1 to C5 and Examples are denoted by Nos. C6 to C13.

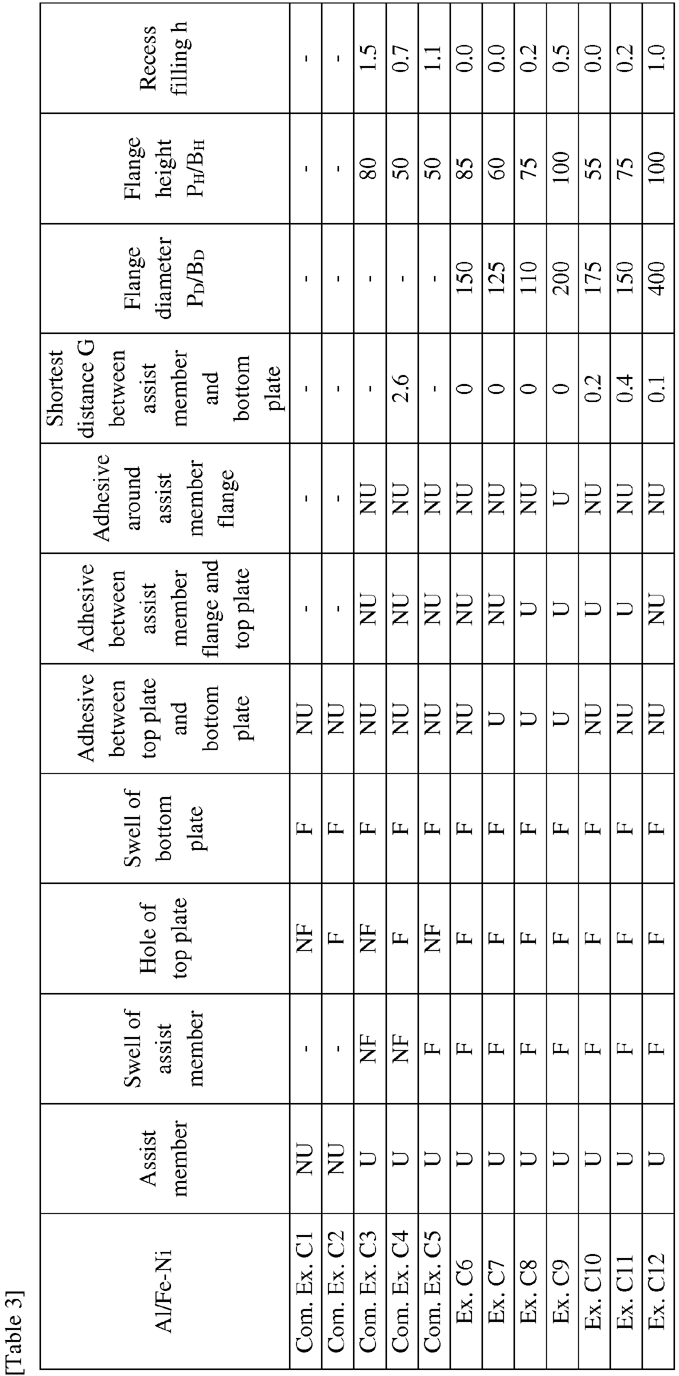

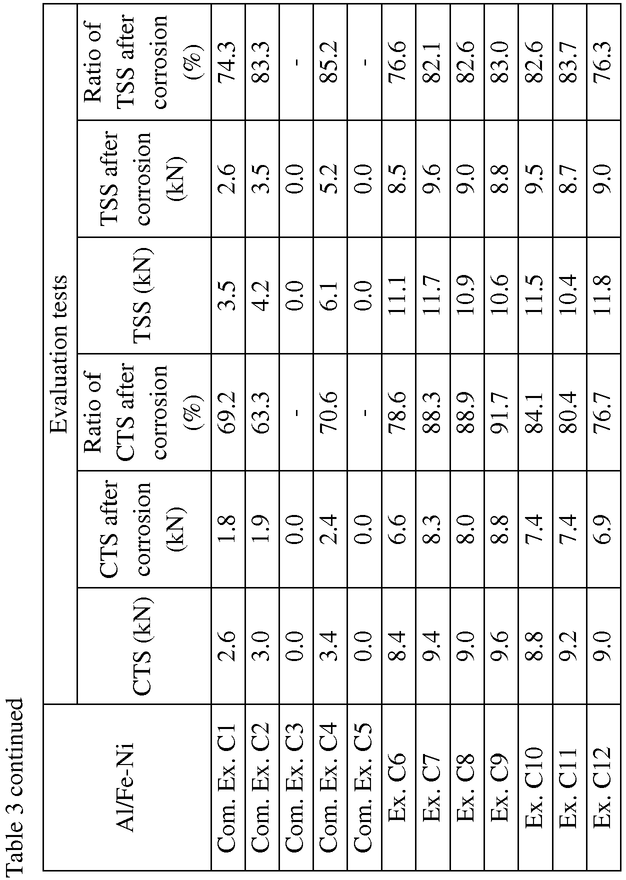

In No. C1, no joining assist member was used, no hole was made through the top plate 10, and arc welding was performed directly on the top plate 10. No adhesive was used. Since an Ni alloy welding rod and an aluminum base material were melt-mixed, a weld metal formed was very fragile intermetallic compounds and TSS and CTS were low.

In No. C2, arc welding was performed without using the joining assist member 30 though a 14.0 mm-diameter hole 11 was made through the top plate 10. Since the aluminum alloy mixing proportion of a weld metal was smaller than in No. C1, the amount of intermetallic compounds was small and the degree of embrittlement was low. However, TSS and CTS were still low.

In No. C3, the joining assist member 30 was put on the top plate 10 through which no hole was made and arc welding was performed from above the joining assist member 30. The material of the joining assist member 30 was JIS G4051 S12C (this also applies to the following samples of Examples C). The joining assist member 30 was not subjected to drawing and had a flat plate shape. As a result, weld penetration into the bottom plate 20 through the joining assist member 30 and the top plate 10 could not be caused and the welding failed.

In No. C4, the joining assist member 30 was put on the top plate 10 through which a 14.0 mm-diameter hole 11 was made and arc welding was performed from above the joining assist member 30. The joining assist member 30 was not subjected to drawing and had a flat plate shape. As a result, penetration by arc welding through the joining assist member 30 was caused. However, the weld penetration width in the bottom plate 20 was very small and the sample was broken easily in the breaking tests.

In No. C5, the joining assist member 30 was put on the top plate 10 through which no hole was made and arc welding was performed from above the joining assist member 30. The joining assist member 30 was subjected to drawing. As in No. C3, weld penetration into the bottom plate 20 through the joining assist member 30 and the top plate 10 could not be caused and the welding failed.

On the other hand, in Nos. C6 to C12, the joining assist member 30 was put on the top plate 10 through which a 14.0 mm-diameter hole was made and arc welding was performed from above the joining assist member 30. The joining assist member 30 was subjected to drawing, and a swell portion 31 was received in the hole 11 of the top plate 10. In these samples, inflow of aluminum into a weld metal formed was restricted to zero or a very small amount by virtue of the presence of the joining assist member 30, whereby a high-quality weld metal was formed. Furthermore, since the degree of weld penetration into the bottom plate 20 was sufficiently high and the non-insertion portion 32 of the joining assist member 30 was larger in area than the hole 11 of the top plate 10, full coming-off was prevented and high CTS was obtained in the cross tension test. Still further, in the samples (Nos. C7 to C11) in which an adhesive was applied at a proper location(s), an effect of preventing electric corrosion at aluminum-steel interfaces was obtained, whereby reduction in CTS and TSS due to corrosion was suppressed and high CTS and TSS after corrosion were obtained.

### <Examples D>

In Examples D, a lap joint was used having a combination of a 1.2 mm-thick top plate 10 made of an aluminum alloy A6N01 and a 1.2 mm-thick bottom plate 20 made of SPCC steel. This lap joint was joined by fixed-point arc welding of a prescribed time by a self-shielded arc welding method using a 1.2 mm-diameter JIS Z3313 T49T14-0NS-G steel wire containing flux.

This welding joint 1 was subjected to breaking tests according to JIS Z3136 and JIS Z3137. In the following, tensile strength of Z3136 was referred to as TSS and tensile strength of Z3137 was referred to as CTS. Acceptance criteria were TSS ≥ 6 kN and CTS ≥ 4 kN.

To obtain preferable performance values, but not indispensable, as in Examples A, B, and C, the welding joint 1 was also subjected to JASO-CCT for 28 days and then subjected to the same breaking tests as described above to obtain TSS after corrosion and CTS after corrosion. Acceptance criteria for these preferable performance values were that they should be 80% or larger of respective values of the tests without corrosion.

In Table 4, Comparative Examples are denoted by Nos. D1 and D2 and Examples are denoted by Nos. D3 and D4.

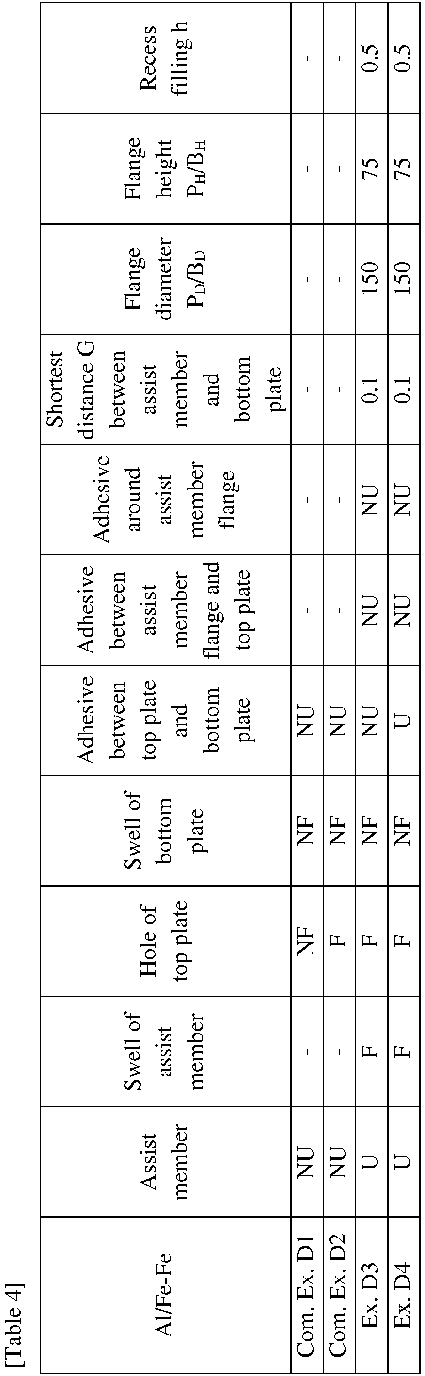

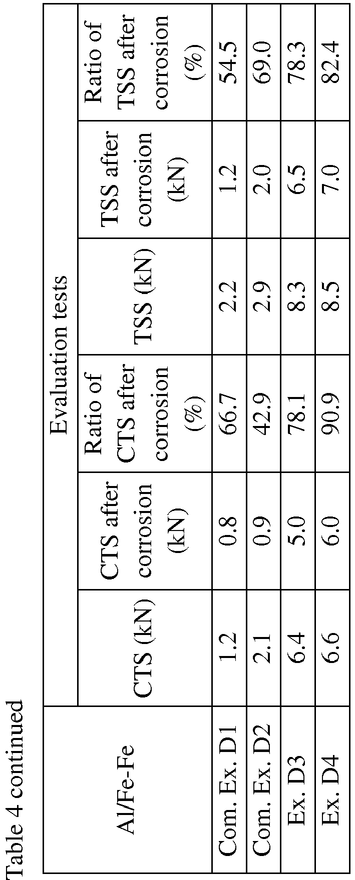

In No. D1, no joining assist member was used, no hole was made through the top plate 10, and arc welding was performed directly on the top plate 10. No adhesive was used. Since a steel welding wire and an aluminum base material were melt-mixed, a weld metal formed was very fragile intermetallic compounds and TSS and CTS were low.

In No. D2, arc welding was performed without using the joining assist member 30 though an 11.0 mm-diameter hole 11 was made through the top plate 10. Since the aluminum alloy mixing proportion of a weld metal was smaller than in No. D1, the amount of intermetallic compounds was small and the degree of embrittlement was low. However, TSS and CTS were still low.

On the other hand, in Nos. D3 and D4, a joining assist member 30 produced by working a member made of JIS G3106 SM490A was put on the top plate 10 through which a 11.0 mm-diameter hole was made and arc welding was performed from above the joining assist member 30. The joining assist member 30 was subjected to drawing, and a swell portion 31 was received in the hole 11 of the top plate 10. In these samples, inflow of aluminum into a weld metal 40 formed was restricted to zero or a very small amount by virtue of the presence of the joining assist member 30, whereby a high-quality weld metal 40 was formed. Furthermore, since the degree of weld penetration into the bottom plate 20 was sufficiently high and the non-insertion portion 32 of the joining assist member 30 was larger in area than the hole 11 of the top plate 10, full coming-off was prevented and high CTS was obtained in the cross tension test. Still further, in the sample No. D4 in which an adhesive was applied at a proper location, an effect of preventing electric corrosion at aluminum-steel interfaces was obtained, whereby reduction in CTS and TSS due to corrosion was suppressed and the CTS after corrosion and the TSS after corrosion were higher than in the sample of No. D3 in which no adhesive was applied.

### <Examples E>

In Examples E, a lap joint was used having a combination of a 4.0 mm-thick top plate 10 made of an aluminum alloy A7N01 and a 3.0 mm-thick bottom plate 20 made of 1,180 MPa-class high tensile strength steel. A 1.5 mm-height swell portion 21 was formed by drawing at a welding position in the bottom plate 20. This lap joint was joined by fixed-point arc welding of a prescribed time by a plasma arc welding method using a 1.2 mm-diameter JIS Z3321 YS309L stainless steel welding wire and using 99% Ar and 1% H₂ as a shielding gas and 100% Ar as a plasma gas.

This welding joint 1 was subjected to breaking tests according to JIS Z3136 "Test piece dimensions and test method of shearing test of resistance spot and projection welding joint" and JIS Z3137 "Cross tension test for resistance spot and projection welding joint." In the following, tensile strength of Z3136 was referred to as TSS and tensile strength of Z3137 was referred to as CTS. Acceptance criteria were TSS ≥ 10 kN and CTS ≥ 8 kN.

To obtain preferable performance values, but not indispensable, as in Examples A to D, the welding joint 1 was also subjected to JASO-CCT for 28 days and then subjected to the same breaking tests as described above to obtain TSS after corrosion and CTS after corrosion. Acceptance criteria for these preferable performance values were that they should be 80% or larger of respective values of the tests without corrosion.

In Table 5, Examples are denoted by Nos. E1 to E3.

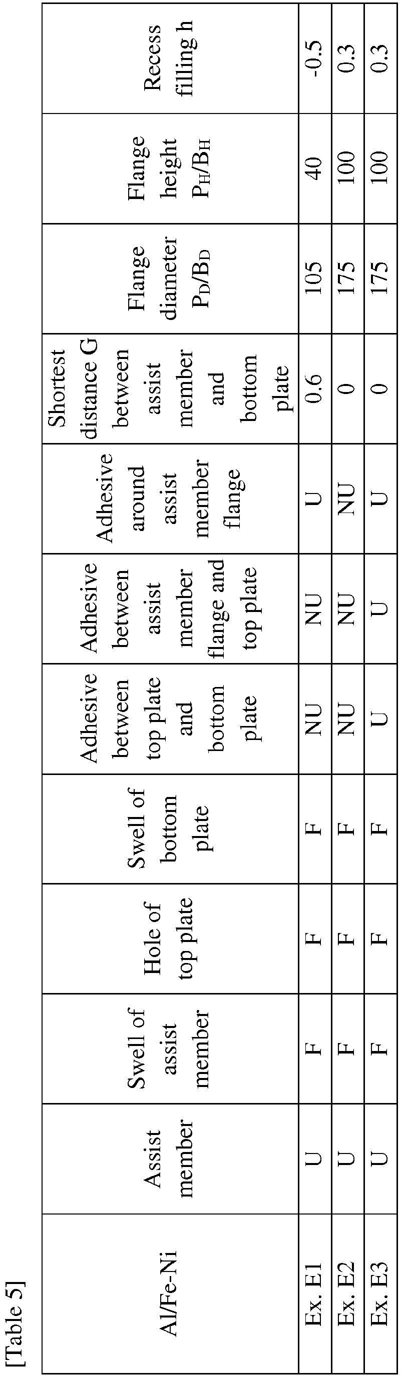

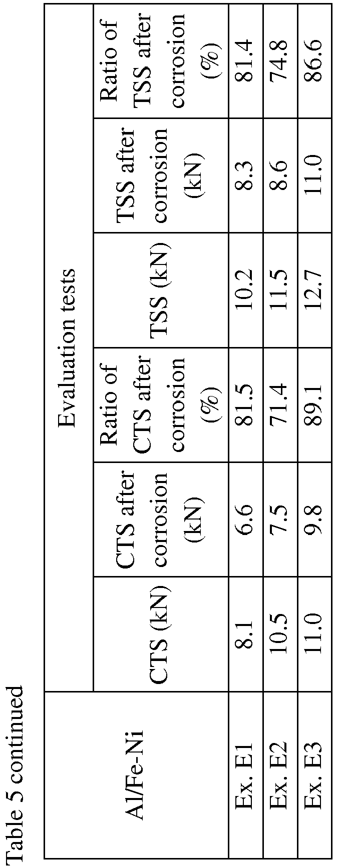

In Nos. E1 to E3, the joining assist member 30 was put on the top plate 10 through which an 18.0 mm-diameter hole was made and arc welding was performed from above the joining assist member 30. The joining assist member 30 was subjected to drawing, and a swell portion 31 was received in the hole 11 of the top plate 10. In these samples, inflow of aluminum into a weld metal 40 formed was restricted to zero or a very small amount by virtue of the presence of the joining assist member 30, whereby a high-quality weld metal was formed. Furthermore, since the degree of weld penetration into the bottom plate 20 was sufficiently high and the non-insertion portion 32 of the joining assist member 30 was larger in area than the hole 11 of the top plate 10, full coming-off was prevented and high CTS was obtained in the cross tension test. Still further, in the samples (Nos. E1 and E3) in which a normal temperature quick setting type two-liquid-mixing adhesive for metal was applied at a proper location(s), an effect of preventing electric corrosion at aluminum-steel interfaces was obtained, whereby reduction in CTS and TSS due to corrosion was suppressed and the CTS after corrosion and the TSS after corrosion were high. More specifically, it is seen that the CTS after corrosion and the TSS after corrosion of No. E3 in which the adhesive was applied were higher than those of No. E2.

The present application is based on Japanese Patent Application No. 2016-166839 filed on August 29, 2016, the disclosure of which is incorporated herein by reference.

### Description of Symbols

10: Top plate
11: Hole
20: Bottom plate
30: Joining assist member
31: Swell portion
32: Non-insertion portion
33: Recess
40: Weld metal
W: Melting portion
Wa: Excess weld metal

## Claims

1. An arc spot welding method for dissimilar material joining for joining a first plate made of an aluminum alloy or a magnesium alloy and a second plate made of steel, the method comprising:
a step of making a hole through the first plate;
a step of overlapping the first plate with the second plate;
a step of inserting a joining assist member made of steel into the hole formed in the first plate, the joining assist member having a swell portion and a non-insertion portion provided around the swell portion; and
a step of penetrating and melting the swell portion of the joining assist member to weld the second plate and the joining assist member by any method of the following (a) to (e):
(a) a gas-shielded arc welding method using, as a consumable electrode, a welding wire to provide the weld metal made of an iron alloy or a nickel alloy;
(b) a non-gas arc welding method using the welding wire as a consumable electrode;
(c) a gas tungsten arc welding method using the welding wire as a non-consumable electrode filler;
(d) a plasma arc welding method using the welding wire as a non-consumable electrode filler; and
(e) a coated arc welding method using, as a consumable electrode, a coated arc welding rod to provide the weld metal made of an iron alloy or a nickel alloy.

2. The arc spot welding method for dissimilar material joining according to claim 1, wherein the swell portion of the joining assist member is formed of a central portion of a flat plate by drawing and the non-insertion portion is formed of a portion other than the central portion of the flat plate.

3. The arc spot welding method for dissimilar material joining according to claim 1, wherein the second plate has a swell portion formed by drawing, and the swell portion of the second plate is placed in the hole of the first plate in the overlapping step.

4. The arc spot welding method for dissimilar material joining according to claim 1, further comprising, before the overlapping step, a step of applying an adhesive to at least one of overlapped surfaces of the first plate and the second plate around the hole over its entire circumference.

5. The arc spot welding method for dissimilar material joining according to claim 1, wherein in the inserting step, an adhesive is applied to at least one of confronting surfaces between the non-insertion portion of the joining assist member and the first plate opposed to the non-insertion portion.

6. The arc spot welding method for dissimilar material joining according to claim 1, wherein in the inserting step or after the filling and welding step, an adhesive is applied to a boundary between the non-insertion portion of the joining assist member and a surface of the first plate.

7. The arc spot welding method for dissimilar material joining according to claim 1, wherein a gap G between the swell portion of the joining assist member and the second plate is 0.5 mm or smaller.

8. The arc spot welding method for dissimilar material joining according to claim 1, wherein the non-insertion portion of the joining assist member has a diameter P_{D} of 105% or larger of a diameter B_{D} of the hole of the first plate.

9. The arc spot welding method for dissimilar material joining according to claim 1, wherein the non-insertion portion of the joining assist member has a height P_{H} of 50% or larger and 150% or smaller of a thickness B_{H} of the first plate.

10. A joining assist member to be used for the arc spot welding method for dissimilar material joining according to any one of claims 1 to 8, the joining assist member being made of steel and having a swell portion provided in a central portion and a non-insertion portion provided around the swell portion.

11. A dissimilar material welded joint comprising a first plate made of an aluminum alloy or a magnesium alloy and a second plate made of steel and arc-spot-welded to the first plate,
wherein the first plate has a hole that reaches an overlapped surface to the second plate,
the dissimilar material welded joint further comprises a joining assist member made of steel, the joining assist member having a swell portion inserted in the hole provided in the first plate and a non-insertion portion provided around the swell portion, and
a recess formed in the swell portion of the joining assist member is filled with a weld metal made of an iron alloy or a nickel alloy, and a melting portion is formed of the weld metal and melted portions of the second plate and the joining assist member.

12. The dissimilar material welded joint according to claim 11, wherein the non-insertion portion is formed into a flat plate shape and the swell portion is formed in a central portion of an external shape of the non-insertion portion.

13. The dissimilar material welded joint according to claim 11, wherein a swell portion formed in the second plate is placed in the hole of the first plate.

14. The dissimilar material welded joint according to claim 11, comprising an adhesive applied to at least one of overlapped surfaces of the first plate and the second plate around the hole over its entire circumference.

15. The dissimilar material welded joint according to claim 11, comprising an adhesive applied to at least one of confronting surfaces between the non-insertion portion of the joining assist member and the first plate opposed to the non-insertion portion.

16. The dissimilar material welded joint according to claim 11, comprising an adhesive applied to a boundary between the non-insertion portion of the joining assist member and a surface of the first plate.

17. The dissimilar material welded joint according to claim 11, wherein a gap G between the swell portion of the joining assist member and the second plate is 0.5 mm or smaller.

18. The dissimilar material welded joint according to claim 11, wherein the non-insertion portion of the joining assist member has a diameter P_{D} of 105% or lager of a diameter B_{D} of the hole of the first plate.

19. The dissimilar material welded joint according to claim 11, wherein the non-insertion portion of the joining assist member has a height P_{H} of 50% or larger and 150% or smaller of a thickness B_{H} of the first plate.
